# EUROPEAN PATENT APPLICATION

(11) **EP 4 617 975 A1**
(43) Date of publication of application: **17.09.2025**
(21) Application number: 25161694.2
(22) Date of filing: 04.03.2025
(51) Int. Cl.: G06Q 10/0875, G06Q 50/08, E04G 1/36, G06F 21/64, G09F 3/03, H04L 9/32, G06K 7/10, G06Q 10/20

(54) **METHOD AND SYSTEM OF TRACKING METAL COMPONENTS OF SCAFFOLDING USED ON THE CONSTRUCTION SITE AND/OR IN STORAGE AT DISTRIBUTION AND RENTAL POINTS AND RELATED BRIDGING**

(30) Priority: 11.03.2024 IT 202400005422
(71) Applicant: Marcegaglia Buildtech S.r.l., 46040 Gazoldo Degli Ippoliti (MN) (IT)
(72) Inventor: RAGAZZI, Riccardo, 20132 Milano (IT); MISINO, Edoardo, 20841 Carate Brianza (MI) (IT); MARTINO, Umberto, 20900 Monza (MI) (IT); CASELLA, Attilio, 20146 Milano (IT)
(74) Representative: PGA S.p.A.

(57) **Abstract**

Method of tracking (M1) metal components (10) of scaffolding (1) used on the construction site (150) and/or in storage at distribution and rental points (160), comprising the following steps: arranging (F1) at least a plurality of metal components (10) for scaffolding (1); fixing (F2) to each metal component (10) at least one identifier element (20) configured to be associated with one or more information data relating to the respective metal component (10), wherein the identifier element (20) has at least one univocal identifying information (A) configured to also univocally identify the respective metal component (10) to which it is fixed; creating (F3) an univocal digital twin (60) relating to each metal component (10) in a digital environment (B) that includes a computer network based on a blockchain technology or platform, wherein the digital twins (60) are univocally created (F3) by a simultaneous and massive operation of detecting the identification information (A) present in the identifier element (20) of each metal component (10), wherein the creation step (F3) of each digital twin (60) includes, or is followed by a creation operation (F3.4), for each digital twin (60), of a permanent register (R) of events (E), which is non-removable and non-erasable, wherein each event (E) identifies a certain status condition of the respective metal component (10) and is entered into the respective permanent register (R) of events (E), wherein each entered event (E) is non-removable, erasable or editable and queues up one or more events (E) previously entered; transferring (F4) each metal component (10) subjected to the creation (F3) of the digital twin (60) to a corresponding storage/use area (140), particularly a construction site (150) or a distribution and/or rental point (160); interacting (F5) with the identifier element (20) of each metal component (10) by means of the respective at least one identifying information (A), to enter into the permanent register (R) one or more events (E) each time the respective metal component (10) has a change of status that is needed in the storage/use area (140) of the metal component (10), wherein the permanent register (R) referred to the digital twin (60) relating to each metal component (10) keeps track of each change relating to the latter, from the creation (F3) of the respective digital twin (60) to the permanence of the same component in the storage/use area (140).

## Description

### Field of technique

The present invention relates to a method of tracking metal scaffolding components used on construction sites and/or in storage at distribution and rental points metal scaffold components.

It is also an object of the present invention to provide a scaffolding and a kit of metal components to define a traceable scaffolding structure.

The object of the present invention is in the industrial field of handling and supplying metal components deputed to the formation and composition of scaffolding.

### State of the art

In the construction industry, it is well known that scaffolding is used to provide access to all parts or areas of a building in order to facilitate the construction work on building structures or renovation work on them.

In order to provide safe access and simultaneously allow work at height on multiple levels, scaffolding of different types are installed that provide stable and safe platforms for the activities of workers and laborers, as well as for the safe transport of construction materials.

Generally, scaffolding are made up of a number of metal components of different shapes and sizes, including vertical uprights and horizontal bars, ledger, cross-supporting elements that provide a solid and stable base, bracings, planks, toeboards, and others. In the case of multidirectional type of scaffolding, appropriate rosettes or joints or connecting elements are also provided to allow quick and safe connections between components, as well as complex and articulated structural configurations.

Regardless of the type of scaffolding produced and used, scaffolding is characterized by a large number of components, the management of which from the production and storage step to installation on the construction sites and the final dismantling after the work has completed, poses numerous problems.

On the front of the management of the components during the production and immediate storage of the same after the production, it should be considered that the operations of inventory and management of the manufactured items prior to their respective storage, as well as the subsequent management of purchase and/or supply orders, take too much time, since the execution of the usual operations of control, counting, storage, recording of logistic data and the correct location of each component in the warehouse are carried out piece by piece, with a high probability of error.

In addition, all of these operations are normally carried out by operators who must count and check, pallet by pallet, the produced components before providing a record of each step involving those components.

With reference to the storage step of components after production, this operation is carried out directly by the operators in charge, who must keep track of the correct placement of the components in the warehouse and update the total number of each type of component in stock. The same situation occurs in the supply management step, since the operators in charge of supplying and/or selling to third parties have to retrieve the inventoried components that are in the warehouse in order to check them before preparing the orders and/or orders received.

The same problems are encountered by with the hirers of these components, as well as on the construction sites, since all the operations intended to keep track of each scaffolding component during its installation and, at the end of the job, its removal and dismantling, are carried out directly by the operators on the site, who, however experienced, are prone to errors and are unable to detect any migration, unintentional due to human error or even voluntary due to acts of theft, of components in storage and in use. In fact, it is not uncommon for the total number of scaffolding components arriving at a site and belonging to a particular owner to differ from the total number of components exiting the site that can be traced back to the same owner.

As mentioned above, these operations, in addition to being particularly tedious and alienating for the operators, involve long processing times with a high risk of error, as well as excessive use of resources, since in a high-productivity environment, with a considerable number of components in use, it is essential to employ a considerable number of people to enable optimal tracking of all components in a reasonable time.

It should also be considered that any error made by an operator in any of the above steps will inevitably have a knock-on effect, negatively affecting the subsequent steps. In fact, in the event that the number of components to be stocked is incorrect, the quantity of components in stock will be incorrectly indicated, with negative consequences during supply and/or sale step to third parties, since there will no longer be any correspondence between what is actually in stock and what appears to be is available and in stock for orders to be fulfilled.

In the event of an error in the warehousing or recording step of stored components, the retrieval of components for order fulfillment in the supply and/or sale step to third parties is inevitably compromised, since it is not possible to have immediate feedback on the location of the components to be retrieved in the warehouse or on the correct quantity these components are available, so that it is necessary to re-establish this information with a significant expenditure of time and resources.

With reference to installations on construction sites, the errors and anomalies that can occur have detrimental effects on construction sites and those responsible for them, since, in addition to problems related to the disappearance and loss of components, theft or unintentional transfer from one owner to another who does not correspond to the real owner, there can also be considerable inconvenience during inspections by official control bodies, which, in the case of non-compliance, can also intervene with sanctions and/or by blocking construction sites and works.

### Purpose of the invention

The main purpose of the present invention is to solve one or more of the problems encountered in the known technique.

It is an object of the present invention to propose a method and system for tracking metal scaffolding components used at construction sites and/or in storage at distribution and/or rental points of metal scaffolding components that can solve the problems found in the known technique.

Similarly, it is a purpose of the present invention to propose a scaffolding or kit of metal components for forming scaffolding, the tracking of which makes it possible to overcome the problems encountered in the known art.

It is also a purpose of the present invention to automate and speed up the entire process of tracking metal scaffolding components from their arrangement to their stay in a storage/use area, such as a distribution and/or rental point or a construction site.

It is also an object of the present invention to enable monitoring by creating a permanent register of events, the events entered in which cannot be changed over time, such a register being able to receive and record only new events that queue up with previously recorded events.

These and other purposes, which will become more apparent from the following description, are substantially achieved by a method and system for tracking metal scaffolding components used at construction sites and/or in storage at distribution and/or rental points of metal scaffolding components, a scaffolding, and a kit of metal scaffolding components according to what is expressed in one or more of the united claims and/or the following aspects, taken alone or in combination with each other or in combination with any of the united claims and/or in combination with any of the additional aspects or features described below.

### Summary of the invention

Aspects of the invention are described herein.

In a 1^{st} aspect, it is provided a method of tracking (M1) metal components (10) of scaffolding (1) used at construction sites (150) and/or in storage at distribution and rental points (160), which comprises the following steps:
- arranging (F1) at least a plurality of metal components (10) for scaffolding (1);
- fixing (F2) on each metal component (10) of the corresponding plurality of components at least one identifier element (20) configured to be associated with one or more information data relating to the respective metal component (10), the at least one identifier element (20) having at least one univocal identifying information (A) configured to also univocally identify the respective metal component (10) on which it is fixed;
- creating (F3) an univocal digital twin (60) of each metal component (10) of the respective plurality of components, in a corresponding digital environment (B), the digital twins (60) of the metal components (10) of the respective plurality of components being univocally created (F3) by a simultaneous and massive operation of detecting the identifying information (A) present in the at least one identifier element (20) of each metal component (10) arranged (F1);
- transferring (F4) each metal component (10) of the respective plurality of components subjected to the creation (F3) of the corresponding digital twin (60) to a respective storage/use area (140) of such metal components (10), in particular a construction site (150) or a distribution and/or rental point (160) of such metal components (10);
- interacting (F5) with the at least one identifier element (20) of each metal component (10) by means of the at least one identifying information (A) to enter into the respective digital twin (60) one or more data and/or information and/or status conditions of the respective metal component (10).

In an additional independent aspect 1^{st} bis, which can be combined with the previous aspect and/or any of the following aspects, it is provided a method of tracking (M1) metal components (10) of scaffolding (1) used at construction sites (150) and/or in storage at distribution and rental points (160) that comprises the following steps:
- arranging (F1) at least a plurality of metal components (10) for scaffolding (1);
- fixing (F2) on each metal component (10) of the corresponding plurality of components at least one identifier element (20) configured to be associated with one or more information data relating to the respective metal component (10), the at least one identifier element (20) presenting at least one univocal identifying information (A) configured to also univocally identify the corresponding metal component (10) on which it is fixed;
- creating (F3) an univocal digital twin (60) of each metal component (10) of the related plurality of components, in a corresponding digital environment (B), the digital twins (60) of the metal components (10) of the related plurality of components being univocally created (F3) by a simultaneous and massive operation of detecting the identification information (A) present in the at least one identifier element (20) of each metal component (10) arranged (F1), the creation step (F3) of each digital twin (60) comprising, or being followed by a creation operation (F3.4), for each digital twin (60), of a permanent register (R) of events (E), which is permanent, non-removable and non-erasable, wherein each event (E) identifies a certain status condition of the respective metal component (10) and is entered into the respective permanent register (R) of events (E), each event (E) being entered by queuing one or more previously entered events (E), each entered event (E) being non-removable, non-erasable or non-editable, the univocal creation of a digital twin (60) in the corresponding digital environment (B) relating to each metal component (10) allowing one or more of the following operations:
   ∘ count of the metal components (10) of the respective plurality of components arranged, the number of metal components (10) of the respective plurality of components that are detected and identified being equal to the number of respective and univocal digital twins (10) created in the corresponding digital environment (B) corresponding to that plurality of components;
   ∘ total count of metal components (10) arranged, the total number of metal components (10) arranged being equal to the total number of virtual digital twins (60) created in the respective digital environment (B);
   ∘ total count of prearranged metal components (10) of the same component type, in particular the same component type means structurally identical metal components (10), the total number of prearranged metal components (10) of the same type being equal to the total number of digital twins (60) relating to the same component type;
   ∘ entry of at least one event (E) indicative of a status condition of each metal component (10) of the respective plurality into the permanent register (R) of events (E) relating to the respective digital twin (60) created in the respective digital environment (B) through an interaction with the respective identifier element (20) and on the basis of the respective at least one identifying information (A), at least one status condition being identifiable among one or more of the following conditions:
      ▪ occurred creation of the univocal and respective digital twin (60) in the corresponding digital environment (B) following the arrangement (F1) of the respective metal component (10);
      ▪ occurred transfer of the metal component (10) arranged in a storage/use area (140);
      ▪ occurred entrance into the storage/use area (140) of the transferred metal component (10);
      ▪ occurred use of the metal component (10) in the storage/use area (140);
      ▪ occurred decommissioning of the metal component (10) in use in the storage/use area (140)
      ▪ occurred exit of the decommissioned metal component (10) from the storage/use area (140);
      ▪ actual physical location of the metal component in the storage/use area (140);
      ▪ structural integrity, wherein the respective metal component (10) is indicated as either fit for use or unfit for use,
      ▪ ownership of the metal component (10), in which the name of the owner of that metal component (10) is recorded.

In an additional independent aspect 1^{st} ter, which can be combined with any of the previous aspects and/or any of the following aspects, it is provided a method of tracking (M1) metal components (10) of scaffolding (1) used at construction sites (150) and/or in storage at distribution and rental points (160), which comprises the following steps:
- arranging (F1) at least a plurality of metal components (10) for scaffolding (1);

- fixing (F2) to each metal component (10) of the corresponding plurality of components at least one identifier element (20) configured to be associated with one or more information data relating to the respective metal component (10), the at least one identifier element (20) presenting at least one univocal identifying information (A) configured to also univocally identify the corresponding metal component (10) on which it is fixed;
- creating (F3) an univocal digital twin (60) of each metal component (10) of the respective plurality of components, in a corresponding digital environment (B), wherein the digital environment (B) comprises a computer network based on a blockchain technology or platform, the digital twins (60) being univocally created (F3) by a simultaneous and massive operation of detecting the identifying information (A) present in the at least one identifier element (20) of each metal component (10) arranged (F1), the creation step (F3) of each digital twin (60) comprising, or being followed by a creation operation (F3.4), for each digital twin (60), of a permanent register (R) of events (E), non-removable and non-erasable, in which each event (E) identifies a certain state condition of the respective metal component (10) and is entered into the respective permanent register (R) of events €, each event (E) entered by queuing one or more events (E) previously entered, each entered event (E) being not removable, erasable or editable;
- transferring (F4) each metal component (10) of the respective plurality of components subjected to the creation (F3) of the corresponding digital twin (60) to a corresponding storage/use area (140) of such metal components (10), in particular a construction site (150) or a distribution and/or rental point (160) of such metal components (10);
- interacting (F5) with the identifier element (20) of each metal component (10) by means of the respective at least one identifying information (A), to enter in the permanent register (R) of events (E) one or more events (E) each time the respective metal component (10) has a change of status, in particular a change of status that is needed in the storage/use area (140) of the metal component (10), the permanent register (R) of events (E) of the digital twin (60) of each metal component (10) keeping track of any data and/or information and/or change of status related to the latter from the creation (F3) of the respective digital twin (60) in the corresponding digital environment (B) to the permanence of the same in the storage/use area (140).

In an additional independent aspect 1^{st} quater, which may be combined with any of the previous aspects and/or any of the following aspects, it is provided a system for tracking scaffolding (1) metal components (10) from the preparation (F1) to the transfer of the same to a storage/use area (140) and the permanence of the same in that storage/use area (140), the tracking system comprising:
- at least one detection apparatus capable of simultaneously and massively detecting the univocal identification information (A) present in the at least one identifier element (20) of each of the at least one metal component (10) of the respective plurality of components arranged in an properly preparation station (100) wherein the at least one identifier element (20) is fixed to each metal component (10) of the respective plurality of components previously arranged (F2), the at least one identifier element (20) being associable with one or more information data relating to the respective metal component (10) and presenting at least one univocal identifying information (A) configured to also identify the respective metal component (10);
- at least one digital environment (B) suitable for receiving one or more digital data and/or information relating to the metal components (10) of the respective plurality of components being subjected to detection by the detection apparatus;
- at least one programmable electronic unit having at least one communication interface with the detection apparatus and the digital environment (B) for automatically creating in said digital environment (B) an univocal digital twin (60) univocally corresponding to each metal component (10) of the respective plurality of components under simultaneous detection by the detection apparatus, the creation (F3) of the relative to the digital twin (60) corresponding to each metal component (10) of the respective plurality of components under detection, being carried out simultaneously as a result of the simultaneous detection of the univocal identifying information (A) of the identifier elements (20) fixed to the metal components (10) of the respective plurality of components;
wherein, at least one of the apparatuses of the system is arranged and configured for entering at least one status condition of each metal component (10) of the respective plurality into the respective digital twin (60), at least one status condition being identifiable among one or more of the following conditions:
- occurred creation of the univocal and corresponding digital twin (60) in the corresponding digital environment (B) following the arrangement (F1) of the respective metal component (10);
- occurred transfer of the metal component (10) arranged in a storage/use area (140);
- occurred entrance into the storage/use area (140) of the transferred metal component (10);
- occurred use of the metal component (10) in the storage/use area (140);
- occurred decommissioning of the metal component (10) in use in the storage/use area (140);
- occurred exit of the decommissioned metal component (10) from the storage/use area (140);
- actual physical location of the metal component in the storage/use area (140);
- structural integrity, wherein the respective metal component (10) is indicated as either fit for use or unfit for use,
- ownership of the metal component (10), in which the name of the owner of that metal component (10) is recorded.

In a 2^{nd} aspect according to any one of the previous aspects, the arrangement step (F1) of the plurality of metal components (10) comprises the arrangement (F1) of metal components (10) of the same type, optionally of structurally identical metal components (10).

In a 3^{rd} aspect according to any one of the previous aspects, the arrangement step (F1) of the plurality of metal components (10) is preceded and/or followed by further arrangement steps (F1) of additional pluralities of metal components (10), particularly of the same type, optionally structurally identical.

In a 4^{th} aspect according to any one of the previous aspects, the arrangement step (F1) of the plurality of metal components (10) is preceded and/or followed by further steps of preparation (F1) of further plurality of metal components (10), in particular the metal components (10) of a specific plurality of components arranged being of a different type, optionally structurally different, from the metal components (10) of another plurality of components arranged(F1).

In a 5^{th} aspect according to any one of the previous aspects, the types of metal components (10) arranged (F1) are between one or more of the following types: upright (11); upright frame (15); ledger/bracing (12) with respective clamp portions (12c); ledger/bracing (18) with engagement joints (18a), plank (13); toeboard (14); guardrail (16); finial (17) optionally, additional types different from the listed types being traceable by the tracking method (M1).

In a 6^{th} aspect according to any one of the previous aspects, the step of fixing (F2) the at least one identifier element (20) to each metal component (10) of a respective plurality of components arranged, comprises fixing two or more identifier elements (20) to each metal component (10) of such plurality of components, each identifier element (20) fixed to the same metal component (10) having the same univocal identifying information (A).

In a 7^{th} aspect according to any one of the previous aspects, the at least one identifier element (20) fixed to each metal component (10) of the respective plurality of components comprises a respective RFID Tag (30) having a respective and univocal non-modifiable EPC code that defines the univocal identifying information (A) of the corresponding identifier element (20).

In an 8^{th} aspect according to any one of the previous aspects, the step of fixing (F2) the at least one identifier element (20) to each metal component (10) of a respective plurality of arranged components (F2) is carried out by fixing at least one RFID Tag (30) to each metal component (10).

In a 9^{th} aspect according to any one of the previous two aspects, the RFID Tag (30) of each identifier element (20) is detectable by radio frequency, particularly by means of a UHF antenna or similar detection apparatus, optionally according to a detection range of 0.1 meters to 10 meters.

In a 10^{th} aspect according to any one of the previous three aspects, the RFID Tag (30) of each identifier element (20) is an anti-metal RFID Tag.

In an 11^{th} aspect according to any one of the previous four aspects, the RFID Tag (30) of each identifier element (20) has dimensions between 5x5 mm and 80x80 mm, optionally between 10x10 mm and 55x55 mm, more optionally between 13x13 mm and 52x52 mm, in particular between 36x13 mm and 52x13mm.

In a 12^{th} aspect according to any one of the previous five aspects, the RFID Tag (30) of each identifier element (20) is housed in a protective capsule (40) fixable on a respective metal component (10) of the respective plurality of components, optionally the RFID Tag (30) being housed in a corresponding housing seat (40a) made in the body of a respective protective capsule (40) fixable to a respective metal component (10) of the respective plurality of components.

In a 13^{th} aspect according to any one of the previous five aspects, the RFID tag of each identifier element (20) is embedded in the body of a respective protective capsule (40) that can be fixed to a respective metal component (10) of the respective plurality of components.

In a 14^{th} aspect according to any one of the previous two aspects, the step of fixing an identifier element (20) to each metal component (10) of a respective plurality of components is carried out by fixing the corresponding RFID Tag (30) by fixing the latter's protective capsule (40) to the respective metal component (10).

In a 15^{th} aspect according to any one of the previous three aspects, the protective capsule (10) of the RFID tag (30) of each identifier element (20) has at least one engagement surface (40b) arranged to accommodate at least one adhesive fixing substance, optionally the engagement surface (40b) being at least partially, preferably completely, countershaped to at least one outer surface portion of the respective metal component (10) of the plurality of components.

In a 16^{th} aspect according to any one of the previous four aspects, wherein the protective capsule (40) of the RFID tag (30) of each identifier element (20) has at least one hooking portion configured to engage at least one structural portion of the corresponding metal component (10) of the plurality of components.

In a 17^{th} aspect according to any one of the previous two aspects, the step of fixing (F2) at least one identifier element (20) on each metal component (10) of a respective plurality of components is carried out by fixing the respective RFID Tag (30) by means of bonding the respective protective capsule (40) on the respective metal component (10), the bonding of the protective capsule (40) on the respective metal component (10) being carried out at the engagement surface (40b) of such protective capsule (40).

In an 18^{th} aspect according to any one of the previous two aspects, the step of fixing (F2) at least one identifier element (20) to each metal component (10) of a relative plurality of components is carried out by fixing at least one RFID Tag (30) through the interaction between the hooking portion of the relative protective capsule (40) of the RFID Tag (30) and a corresponding structural portion of the respective metal component (10).

In a 19^{th} aspect according to any one of the previous seven aspects above, the protective capsule (40) of the RFID tag (30) of each identifier element (20) is made of a polymeric material.

In a 20^{th} aspect according to any one of the previous eight aspects, the protective capsule (40) of the RFID tag (30) of each identifier element (20) is made of TPU thermoplastic polyurethane.

In a 21^{st} aspect according to any one of the aspects from the 12^{th} aspect to the 19^{th} aspect, the protective capsule (40) of the RFID Tag (30) of each identifier element (20) is made of acrylonitrile butadiene styrene ABS or high impact polystyrene HDPS or high density polyethylene HDPE or polycarbonate PC or an amorphous thermopolymer and polycarbonate ASA/PC blend .

In a 22^{nd} aspect according to any one of the previous ten aspects, the protective capsule (40) of the RFID tag (30) of each identifier element (20) is obtained by a forming process by additive manufacturing or injection molding or thermoforming.

In a 23^{rd} aspect according to any of the previous eleven aspects, the protective capsule (40) of the RFID Tag (30) of each identifier element (20) has a hardness expressed in Shore A of not less than 80A, optionally not less than 90A, in particular substantially equal to 95A.

In a 24^{th} aspect according to the 15^{th} aspect or any one of the previous eight aspects if dependent on the 15^{th} aspect or any aspect that is dependent on the 15^{th} aspect, the adhesive fixing substance includes an epoxy glue or an acrylic or polyurethane glue.

In a 25^{th} aspect according to the 15^{th} aspect or any of the previous nine aspects if dependent on the 15^{th} aspect or any aspect that is dependent on the 15^{th} aspect, the adhesive fixing substance includes a one-component or two-component glue.

In a 26^{th} aspect according to the previous aspect, the bonding of the protective capsule (40) of the RFID Tag (30) of at least one identifier element (20) onto a respective metal component (10) is carried out according to the following steps:
- deposit the glue, which defines the adhesive fixing substance, on the respective engagement surface (40b) of the respective protective capsule (40) of the RFID Tag (30) of the at least one identifier element (20) to be fixed;
- placing the engagement surface (40b) of the respective protective capsule (40) of the RFID tag (30) of the at least one identifier element (20) to be fixed in contact with a respective outer surface portion of the respective metal component (10) of the plurality of metal components (10);
- maintaining the engagement surface (40b) of the respective protective capsule (10) of the RFID Tag (30) of the at least one identifier element (20) to be fixed, in contact with the respective outer surface portion of the respective metal component (10) of the respective plurality of components for a period of time sufficient to ensure complete curing of the glue, optionally a period of time of not less than 12 hours, more optionally not less than 18 hours, in particular not less than 24 hours, more in particular not less than 48 hours, preferably not less than 72 hours.

In a 27^{th} aspect according to the previous aspect, the glue deposit step, which defines the adhesive fixing substance, on the respective engagement surface (40b) of the respective protective capsule (40) of the RFID Tag of the at least one identifier element (20) to be fixed, is carried out by means of at least one application gun or a respective application tool comprising at least one glue dispensing nozzle.

In a 28^{th} aspect according to the 15^{th} aspect or any of the aspects from the 16^{th} aspect to the 23^{rd} aspect when dependent on the 15^{th} aspect or any one of the aspects that depend on the 15^{th} aspect, the adhesive fixing substance includes a double-sided tape, optionally epoxy-based or acrylic-based or polyurethane-based, plus optionally in foam form.

In a 29^{th} aspect according to the previous aspect, the bonding of the protective capsule (40) of the RFID Tag (30) of the at least one identifier element (20) on each metal component (10) is carried out according to the following steps:
- removing a first protective film from the double-sided tape to make a respective first adhesive portion of the double-sided tape available;
- applying the first adhesive portion of the double-sided tape to the respective engagement surface (40b) of the respective protective capsule (40) of the RFID Tag of the at least one identifier element (20) to be fixed;
- removing from a second adhesive portion of the applied double-sided tape, facing away from the first adhesive portion, a second protective film, to make the second adhesive portion available;
- placing the engagement surface (40b) of the respective protective capsule (40) of the RFID tag of the at least one identifier element (20) to be fixed in contact with a respective outer surface portion of the respective metal component (10) of the plurality of metal components in such a way that the second adhesive portion of the double-sided adhesive tape adheres at least partially, in particular completely, to the outer surface portion of the respective metal component (10);
- maintaining the engagement surface (40b) of the respective protective capsule (40) of the RFID tag of the at least one identifier element (20) to be fixed, in contact with the respective outer surface portion of the respective metal component (10) of the respective plurality of components for a period of time sufficient to ensure complete polymerization of the adhesive substance of the double-sided tape, optionally a period of time of not less than 12 hours, more optionally not less than 18 hours, in particular not less than 24 hours, more in particular not less than 48 hours, preferably not less than 72 hours.

In a 30^{th} aspect according to any one of the previous two aspects, the retention of the engagement surface (40b) of the respective protective capsule (40) of the RFID Tag (30) of the at least one identifier element (20) to be fixed, in contact with the respective outer surface portion of the respective metal component (10) of the respective plurality of components for a period of time sufficient for the complete polymerization of the adhesive substance of the double-sided tape, is carried out by the use of at least one respective retention support, optionally at least one magnetic retention support.

In a 31^{st} aspect according to any one of the previous aspects, the fixing of the at least one identifier element (20) on each metal component (10) of the respective plurality of components is carried out by means of the use of at least one positioning tool.

In a 32^{nd} aspect according to the previous aspect when dependent on the 34^{th} aspect, the positioning tool includes and/or defines the retention support or vice versa.

In a 33^{rd} aspect according to any one of the previous sixteen aspects, the engagement surface (40b) of the protective capsule (40) of the RFID tag (30) of the at least one identifier element (20) to be fixed to each metal component (10) of the plurality of components thereof is subjected to a surface treatment and cleaning operation prior to accommodating the adhesive fixing substance, optionally the surface treatment and cleaning operation comprising at least one cleaning operation by isopropyl alcohol or a similar cleaning substance.

In an aspect 33^{th} bis according to any one of the aspects from the 12^{th} aspect to the 14^{th}, the step of fixing at least one identifier element (20) on each metal component (10) of a respective plurality of components is carried out by fixing the respective RFID Tag (30) by welding at least one metal structure associated with the respective protective capsule (40) on the respective metal component (10).

In an aspect 33^{th} ter according to the previous aspect, the welding of the at least one metal structure associated with the protective capsule (40) to the respective metal component (10) is carried out by a spot welding operation of at least one portion of the metal structure associated with the protective capsule, in particular of two or more portions of the metal structure associated with the protective capsule (40), optionally the portion of the metal structure associated with the protective capsule (40) and deputed to the welding emerging and protruding therefrom so as to adhere, at least partially, to the target surface of the respective metal component (10) upon the welding operation.

In an aspect 33^{th} quater according to the previous aspect, the metal structure of the protective capsule (40) comprises a one-piece plate, flat or arched depending on the target metal component (10) and the shape that the protective capsule (40) must have in order to be fixed to that metal component (10), the one-piece plate of which supports, particularly in direct contact, a respective RFID Tag (30) and has one or more fixing portions or appendages that emerge or protrude from the capsule itself to enable welding operations of the metal structure and, therefore, of the protective capsule (40) with the respective RFID Tag (30) to the respective metal component (10) of a scaffolding (1).

In an aspect 33^{th} quinquies according to the aspect 33^{th} ter, the metal structure of the protective capsule (40) comprises a one-piece plate, flat or arched depending on the target metal component (10) and the shape that the protective capsule (40) must have in order to be fixed to that metal component (10), supporting, in particular by direct contact, a respective RFID Tag (30), additional metal plates detached and separated from the one-piece plate of the metal structure that supports the RFID Tag (30) are provided and joined to the protective capsule 40, in particular by co-molding or by other bundling and joining techniques, in order to make available structural elements suitable for spot welding, on the respective metal component (10) of a scaffolding (1).

In an aspect 33^{th} sexies according to any one of the two previous aspects, the one-piece plate of the metal structure is co-molded to the protective capsule (40), whereby the main portion of the one-piece plate of that metal structure and the respective RFID Tag (30) carried thereby are contained, in particular hermetically, in a mutual adhesion relationship, by the protective capsule itself.

In an aspect 33^{th} septies according to any of the previous six aspects, the one-piece plate of the metal structure or any additional plate for spot welding is made of stainless steel.

In an aspect 33^{th} octies according to any of the previous seven aspects, the spot welding includes at least one resistance welding operation.

In an aspect 33^{th} novies according to any one of the previous eight aspects, the protective capsule (40) of the RFID tag (30) of each identifier element (20) is made of a polymeric material.

In an aspect 33^{th} decies according to any one of the previous nine aspects, the protective capsule (40) of the RFID tag (30) of each identifier element (20) is made of TPU thermoplastic polyurethane.

In an aspect 33^{th} undecies according to any one of the aspects from the aspect 33^{th} bis to the aspect 33^{th} novies, the protective capsule (40) of the RFID tag (30) of each identifier element (20) is made of acrylonitrile butadiene styrene ABS or high impact polystyrene HDPS or high density polyethylene HDPE or polycarbonate PC an blendamorphous thermopolymer and polycarbonate ASA/PC .

In an aspect 33^{th} duodecies according to any one of the previous eleven aspects, the protective capsule (40) of the RFID tag (30) of each identifier element (20) is obtained by a forming process by additive manufacturing or injection molding or thermoforming or co-molding.

In an aspect 33^{th} ter decies according to any one of the previous twelve aspects, the protective capsule (40) of the RFID Tag (30) of each six identifier element (20) has a hardness expressed in Shore A of not less than 80A, optionally not less than 90A, in particular substantially equal to 95A.In a 34^{th} aspect according to any one of the previous aspects, the step of creating (F3) the univocal digital twin (60) of each metal component (10) of the respective plurality of components, in a corresponding digital environment (B), being performed by carrying out a simultaneous and massive operation of detecting (F3.1) the identifying information (A) of the identifier elements (20) fixed to the metal components (10) of the respective plurality of components.

In a 35^{th} aspect according to any one of the previous aspects, the step of creating (F3) the univocal digital twin (60) of each metal component (10) of the respective plurality of components, in a corresponding digital environment (B), being carried out simultaneously with the creation of the univocal digital twin (60) relating to each metal component (10) of one or more additional pluralities of metal components (10).

In a 36^{th} aspect according to any of the previous two aspects, the step of creating (F3) the univocal digital twin (60) relating to each metal component (10) of one or more plurality of components, in a corresponding digital environment (B), is carried out simultaneously and massively on metal components (10) of the same type, particularly structurally identical.

In a 37^{th} aspect according to any one of the previous three aspects, the step of creating the univocal digital twin (F3) of each metal component (10) of one or more plurality of components, in a corresponding digital environment (B), is carried out simultaneously and massively by crossing the respective metal components (10) through a detection gate (101) provided with at least one detection apparatus, in particular operating in radio frequency, optionally by means of at least one UHF antenna, in particular the crossing of the detection gate (101) by the metal components (10) being carried out by simultaneously crossing all of the metal components (10) to be detected or according to a sequential crossing of groups of metal components (10) of the same plurality of components to be detected.

In a 38^{th} aspect according to any of the previous four aspects, the step of creating (F3) the univocal digital twin (60) of each metal component (10) of one or more plurality of components, in a corresponding digital environment (B), is carried out massively and simultaneously by the following steps:
- placing the metal components (10) of one or more plurality of arranged components within a corresponding confined detection region (102) provided with one or more detection apparatuses, particularly operating in radio frequency, optionally by means of at least one UHF antenna, more optionally the confined detection region (102) being limited by a controlled chamber;
- simultaneously and massively detecting all of the univocal identification information (A) of the respective identifier elements (20) fixed on the respective metal components (10) in the confined detection region (102).

In a 39^{th} aspect according to any one of the previous five aspects, the step of simultaneously and massively creating (F3) the univocal digital twin (60) of each metal component (10) of one or more plurality of components arranged (F1) is performed by carrying out at least one simultaneous detection operation (F3.1) of the identification information (A) of the identifier elements (20) fixed to the metal components (10) under detection, the detection operation (F3.1) determining, for each metal component (10) under detection, the assignment, particularly automatically, of the univocal identification information (A) of the at least one respective identifier element (20) as the univocal identification information of the respective metal component (10).

In a 40^{th} aspect according to the previous aspect when dependent on the 37^{th} aspect, the simultaneous and massive detection operation (F3.1) of the univocal identifying information (A) of the at least one identifier element (20) fixed to each metal component (10) of the respective plurality of components under detection is carried out by at least one detection apparatus associated with the detection gate (101).

In a 41^{st} aspect according to the 39^{th} aspect when it depends on the 37^{th} aspect, the simultaneous and massive detection operation (F3.1) of the univocal identifying information (A) of the at least one identifier element (20) fixed on each metal component (10) of the respective plurality of components under detection is carried out by at least one active detection apparatus at the confined detection region (102).

In a 42^{nd} aspect according to any one of the previous two aspects, the at least one identifier element (20) fixed on each metal component (10) of the respective plurality of components comprises a respective RFID Tag (30) having a respective and univocal EPC code defining the univocal identifying information (A) of the respective identifier element (20), the at least one detection apparatus being configured to detect the univocal EPC code of the respective RFID Tag (30) of the respective at least one identifier element (20) fixed to each metal component (10) of the respective plurality of components as the univocal identifying information of the respective metal component (10) under detection, in particular the at least one detection apparatus comprising at least one detection antenna operating in radio frequency, optionally according to UHF frequencies.

In a 43^{rd} aspect according to the previous aspect, in the case where two or more identifier elements (20) are fixed to a respective and same metal component (10) they have respective and identical univocal EPC codes, the simultaneous and massive detection operation (F3.1) of the univocal identification information (A) being carried out by detecting the univocal EPC code of the RFID Tag (30) of one of the identifier elements (20) fixed on the respective and same metal component (10) as being identical to the univocal EPC code of the RFID Tag (30) of every other identifier element (20) fixed on the same metal component (10).

In a 44^{th} aspect according to any of the previous ten aspects, the massive and simultaneous creation step (F3) of the univocal digital twin (60), in a corresponding digital environment (B), relating to each metal component (10) of the respective plurality of components under detection, also includes an assignment operation (F3.3), to each digital twin (60) in creation, of the corresponding type of metal components (10) under detection.

In a 45^{th} aspect according to the previous aspect, the massive and simultaneous creation step (F3) of the univocal digital twin (60), in a corresponding digital environment (B), of each metal component (10) of a respective plurality of components of the same type previously arranged, includes the steps of:
- simultaneously and massively detecting (F3.1) the univocal identifying information (A) of the at least one identifier element (20) fixed to each metal component (10) that is subjected to the creation step (F3) of the respective and univocal digital twin (60) in the corresponding digital environment (B);
- assigning to each detected metal component (10) the univocal identifying information (A) of the respective at least one identifier element (20);
- creating (F3) simultaneously and massively, optionally automatically, in a corresponding digital environment (B), the digital twin (60) of each metal component (10), whose univocal identifying information (A) of the at least one respective identifier element (20) has been previously detected, the digital twin (60) of each metal component (10) being related to the univocal identifying information (A) of the at least one respective identifier element (20) of the detected metal component (10);
- assigning (F3.3) to each created digital twin (60), the respective type of the metal component (10), in particular the actual type, of the respective metal component (10), such that each univocal identifying information (A) corresponding to at least one identifier element (20) fixed to a respective metal component (10), also corresponds to a respective and univocal digital twin (60) related to the same type of the respective metal component (10).

In a 46^{th} aspect according to any one of the previous twelve aspects, the massive and simultaneous creation step (F3) of each digital twin (60) in a corresponding digital environment (B) of each metal component (10) under detection includes, or is followed by, a creation operation (F3.4), for each created digital twin (60), of a permanent register (R) of events (E) in which one or more data and/or information relating to one or more changes of a status condition of the metal component (10) is entered.

In a 47^{th} aspect according to the previous aspect, the permanent register (R) of events (E) relating to the digital twin (20) corresponding to each metal component (10) is not removable or erasable.

In a 48^{th} aspect according to any one of the previous two aspects, the permanent register (R) of events (E) relating to the digital twin (60) corresponding to each metal component (10) is configured to receive, by entering, one or more events (E) relating to one or more status changes of the respective metal component (10) .

In a 45^{th} aspect according to the previous aspect, each event (E) entered in the permanent event register (R) of events (E) relating to the digital twin (60) corresponding to each metal component (10) is queued to the event(s) (E) previously entered in the same register (R).

In a 50^{th} aspect according to any one of the previous two aspects, each event (E) entered into the permanent register (R) of events (E) relating to the digital twin (60) corresponding to each metal component (10) is not removable or erasable, in particular the permanent register (R) of events (E) allowing only the entry of new events and allowing neither the deletion nor the modification of previously entered events (E).

In a 51^{st} aspect according to any one of the previous aspects, the digital environment (B) in which the digital twins (60) of each metal component (10) of the respective plurality of components are created allows the creation of the corresponding digital twin (60) but does not allow the deletion of any digital twin (60) created.

In a 52^{nd} aspect according to any one of the previous aspects, each event indicative of a change in a status condition of the respective metal component (10) that is entered into the permanent register (R) of events (E) of the corresponding digital twin (60) remains permanently recorded in the corresponding digital environment (B).

In a 53^{rd} aspect according to any one of the previous aspects, the digital environment (B) in which the digital twins (60) relating to each metal component (10) of the respective plurality of components are created is a blockchain, optionally the digital environment (B) wherein the digital twins (60) of each metal component (10) of the respective plurality of components are created is a computer network based on a blockchain technology or platform.

In a 54^{th} aspect according to any one of the previous aspects, the transfer step (F4) of each metal component (10) of the respective plurality of components in the storage/use area (140) of said metal components (10) is carried out upon entry (F4.1) in the permanent register (R) of the digital twin (60) of each metal component (10) of an event (E) indicative of a status condition of an occurred transfer, the entry (F4.1) of the occurred transfer being carried out simultaneously and massively on the permanent register (R) of events (E) of the digital twins (60) of the metal components (10) of the plurality of components being transferred by means of an interaction with the identifier elements (20) of the metal components (10) themselves.

In a 55^{th} aspect according to the previous aspect, the entry (F4.1) of the event (E) relating to the status condition of an occurred transfer into the permanent event register (R) of events (E) relating to the digital twin (60) of each metal component (10) prior to the transfer of the latter into the corresponding storage/use area (140) is carried out simultaneously and massively on the respective plurality of components to be transferred such a way as to simultaneously record, optionally automatically, in the corresponding digital twins (60) relating to the respective metal components (10) of the change of the status condition of the latter from the condition of the occurred creation (F3) to the condition of the occurred transfer.

In a 56^{th} aspect according to any one of the previous two aspects, the entry (F4.1) of the event (E) relating to the status condition of the occurred successful transfer into the permanent event register (R) of events (E) relating to the digital twin (60) corresponding to each metal component (10) prior to transfer to the storage/use area (140) is carried out by at least one simultaneous and massive operation of detecting the univocal identifying information (A) of the at least one identifier element (20) relating to each metal component (10) of the respective plurality of components to be stored.

In a 57^{th} aspect according to the previous aspect, the simultaneous and massive operation of detecting the at least one univocal identifying information (A) of the respective at least one identifier element (20) relating to each metal component (10) of the respective plurality of components to be transferred is carried out by crossing the respective metal components (10) to be transferred through a respective detection gate (101'), optionally the crossing of the detection gate (101') by the metal components (10) to be transferred being carried out by simultaneously crossing all of the metal components (10) to be detected or according to a sequential crossing of groups of metal components (10) to be detected.

In a 58^{th} aspect according to the previous aspect, the simultaneous and massive operation of detecting the at least one univocal identifying information (A) of the respective at least one identifier element (20) of each metal component (10) of the respective plurality of components to be stored is carried out by means of at least one detection apparatus associated with the detection gate (101'), the detection gate operating in radio frequency, in particular by means of at least one UHF antenna.

In a 59^{th} aspect according to one or more of the previous three aspects, the simultaneous and massive operation of detecting the respective at least one univocal identifying information (A) of the respective at least one identifier element (20) of each metal component (10) of the respective plurality of components to be transferred is carried out according to the following steps:
- stationing the metal components (10) in a respective confined detection region (102'), in particular the confined detection region (102') being limited by a controlled chamber, at least one detection apparatus being active within the confined detection region (102'), in particular operating in radio frequency, more particularly by means of at least one UHF antenna;
- simultaneously and massively detecting, by means of the identification information (A) of the respective identifier elements (20), all of the metal components (10) present in the confined detection region (102') to optionally automatically enter into the respective digital twins (60) present in the respective digital environment (B) a new event (E) indicative of the occurred transfer condition.

In a 60^{th} aspect according to any one of the previous four aspects, the operation of simultaneously and massively detecting the at least one univocal identifying information (A) of the respective at least one identifier element (20) of each metal component (10) of the respective plurality of components to be stored is carried out by the use of at least one interaction device (104), in particular a portable one configured to communicate with the at least one identifier element (20) of each metal component (10) and/or with the digital environment (B), optionally by means of at least one programmable electronic unit deputed for managing and/or entering or loading into the permanent event register (R) of events (E) of the respective digital twin of each new event (E) related to a new status condition of the respective metal component (10).

In a 61^{st} aspect according to the previous aspect, the interaction device includes at least one detection apparatus that operates in radio frequency, particularly by means of at least one UHF antenna.

In a 62^{nd} aspect according to the previous aspect, the at least one identifier element (20) fixed toeach metal component (10) of the respective plurality of components comprises a respective RFID Tag (30) having a respective and univocal EPC code defining the univocal identifying information (A) of the respective identifier element (20), the at least one detection apparatus being configured to detect the univocal EPC code of the RFID Tag (30) of the at least one identifier element (20) fixed on each metal component (10) of the respective plurality of components as the univocal identifying information of the respective metal component (10) under detection.

In a 63^{rd} aspect according to the previous aspect, in the case where two or more identifier elements (20) are fixed on a respective same metal component (10), they present respective identical univocal EPC codes, the operation of detecting the univocal identification information (A) being carried out by detecting the univocal EPC code of the RFID Tag (30) of one of the identifier elements (20) fixed to the respective and same metal component (10) as being identical to the univocal EPC code of the RFID Tag (30) of every other identifier element (20) fixed to the same metal component (10).

In a 64^{th} aspect according to any one of the previous nine aspects, the entry operation (F4.1) of the event (E) relating to the status condition of the occurred transfer into the respective permanent register (R) of events (E) relating to the digital twin (60) corresponding to each metal component (10) of the respective plurality of components to be transferred in the storage/use area (140) is followed by at least one interaction step (F6) with the identifier element (20) of each metal component (10) by means of the respective at least one univocal identifying information (A) to enter (F6.1) into the respective permanent register (R) of events (E) a new event (E) relating to an additional change of status of the respective metal component (10) from the condition of the occurred transfer to the condition of the occurred entrance into the storage/use area (140).

In a 65^{th} aspect according to the previous aspect, the interaction step (F6) is carried out by at least one simultaneous and massive operation of detecting the univocal identification code (A) of the respective at least one identifier element (20) of each of the entering metal components (10).

In a 66^{th} aspect according to any one of the previous two aspects, the interaction step (F6) is carried out simultaneously and massively, in particular automatically, by at least one detection apparatus, in particular a plurality of detection apparatuses distributed within the storage/use area (140), each operating in radio frequency, in particular by means of one or more UHF antennas, each detection apparatus being configured to:
- recognizing each entering metal component (10) by detecting the respective univocal identifying information (A) of the respective at least one identifier element (20);
- entering into the permanent register (R) of events (E) of the corresponding digital twin (60) in the respective digital environment (B), a new event (E) relating to the condition of the occurred entrance.

In a 67^{th} aspect according to any one of the previous three aspects, the entry in the permanent register (R) of events (E) of each digital twin (60) of the condition of the occurred entrance into the storage/use area (140) is carried out simultaneously and massively by means of the at least one interaction device (104), in particular portable, provided with at least one detection apparatus operating in radio frequency, in particular by means of at least one UHF antenna, the interaction device (104) being configured to communicate with the at least one identifier element (20) of each metal component (10) and/or with the digital environment (B), optionally by means of at least one programmable electronic unit deputed to manage and/or update the digital twins, the detection apparatus or each of the detection apparatuses being configured to:
- recognizing each metal component (10) of a respective plurality of entered components by the respective univocal identifying information (A) of the respective at least one identifier element (20);
- entering into the permanent register (R) of events (E) of the respective digital twin (60) of each entering metal component (10) a new event (E) relating to the occurrence of the entrance.

In a 68^{th} aspect according to any one of the previous two aspects, the at least one identifier element (20) fixed on each metal component (10) of the respective plurality of components comprises a respective RFID Tag (30) having a corresponding and univocal EPC code defining the univocal identifying information (A), the at least one detection apparatus being configured to detect the univocal EPC code of the RFID Tag (30) of the at least one identifier element (20) fixed on each metal component (10) of the respective plurality of components as the univocal identifying information (A) of the respective metal component under detection(10).

In a 69^{th} aspect according to the previous aspect, in the case where two or more identifier elements (20) are fixed on a respective same metal component (10), they present respective identical univocal EPC codes, the operation of detecting the univocal identification information (A) being carried out by detecting the univocal EPC code of the RFID Tag (30) of one of the identifier elements (20) fixed to the respective and same metal component (10) as being identical to the univocal EPC code of the RFID Tag (30) of every other identifier element (20) fixed to the same metal component (10).

In a 70^{th} aspect according to any one of the aspects from the 64^{th} to the 69^{th} aspect, the metal components (10) entering the stock/use area (140) of the metal components (10) are subjected to at least one control step (F7) wherein it is verified whether the number of the entering metal components (10) and/or the type thereof and/or the individual components (10) correspond to the number of metal components (10) and/or the type themselves and/or the individual components (10) expected in the storage/use area (140) based on a previously created transfer order (T) showing the number and/or type and/or individual metal components (10) to be transferred to the storage/use area (140), the control step (F7) being carried out, by means of an optionally simultaneous and massive interaction with the identifier elements (20) of the metal components (10) entering the storage/use area (140) on the basis of their respective univocal identification information (A).

In a 71^{st} aspect according to any one of the aspects from the 66^{th} to the 70^{th} aspect, the entry operation (F6.1) of the event (E) relating to the new status condition of the occurred entry into the permanent register (R) of events (E) corresponding to the digital twin (60) relating to each metal component (10) and/or the control step (F7), are carried out by at least one simultaneous and massive operation of detecting the univocal identifying information (A) of the at least one identifier element (20) of each metal component (10) of the respective plurality of components entering the storage/use area (140).

In a 72^{nd} aspect according to the previous aspect, the entry operation (F6.1) of the occurred entry and/or the control step (F7) being carried out crossing the respective metal components (10) through a respective detection gate (101') provided with at least one detection apparatus, in particular operating in radio frequency, optionally by means of at least one UHF antenna, in particular the crossing of the detection gate (101') by the metal components (10) being carried out by simultaneously crossing all of the metal components (10) to be detected or according to a sequential crossing of groups of metal components (10) of the same plurality of components to be detected.

In a 73^{rd} aspect according to any one of the previous two aspects, the entry operation (F6.1) of the occurred entry and/or the control step (F7) being carried out by the following steps:
- placing the metal components (10) of a respective plurality of components within a corresponding confined detection region (102') provided with one or more detection apparatus, particularly operating in radio frequency, optionally by means of at least one UHF antenna, more optionally the confined detection region (102') being limited by a controlled chamber;
- simultaneously and massively detecting all of the univocal identification information (A) of the corresponding identifier elements (20) fixed to the corresponding metal components (10) in the confined detection region (103).

In a 74^{th} aspect according to any one of the previous three aspects, the entry operation (F6.1) of the occurred entry and/or the control step (F7) being carried out by means of use of at least one interaction device (104), in particular portable, provided with at least one detection apparatus, in particular operating in radio frequency, optionally by means of at least one UHF antenna, the interaction device (104) being configured to communicate with the at least one identifier element (20) of each metal component (10) to simultaneously and massively enter into the permanent registers (R) of events (E) of the respective digital twins (60) of the metal components (10) new events (E) relating to new status conditions of the respective metal components (10).

In a 75^{th} aspect according to any one of the aspects from the 64^{th} aspect to the 74^{th} aspect, it is also provided a step of loading (F8) into the permanent register (R) of events (E) relating to each of the respective digital twins (60) corresponding to the respective metal components (10) entering the storage/use area (140) a new event indicative of the change of a status condition of the respective metal component (10) from an entrance condition to a use condition of the same metal component (10) in the storage/use area (140).

In a 76^{th} aspect according to the previous aspect, the use condition corresponds to at least one of the following options:
- storage of the metal components (10) in a respective warehouse (140) of a distribution and/or rental point (160) according to respective stationing positions, optionally the loading step (F8) of the condition of use of each of the components (10) being carried out, simultaneously and massively, on a relative plurality of metal components (10) in stock, by means of an interaction with the respective identifier elements (20) and on the basis of the respective univocal identification information (A);
- installation of a related scaffolding (1) at a respective construction site (150), optionally the loading step (F8) of the condition of use of each of the components (10) being carried out, simultaneously and massively, on a respective plurality of metal components (10) that are installed to form at least a portion of a scaffolding (1), by an interaction with the respective identifier elements (20) and on the basis of the respective univocal identifying information (A) of the installed metal components (10).

In a 77^{th} aspect according to any one of the previous two aspects, the metal components (10) in use within the storage/use area (140) are subjected to at least one additional control step (F9) in which it is verified whether the number and/or type and/or individual metal components (10) in use in the storage/use area (140) match the number and/or type and/or individual metal components (10) previously entered into the storage/use area (140) and/or previously expected in the storage/use area (140) based on the previously created transfer order (T) showing the number and/or type of metal components (10) and/or individual metal components (10) being transferred into the storage/use area (140), the further control step (F9) being carried out, by means of an optionally simultaneous and massive interaction with the identifier elements (20) of the metal components (10) in use in the storage/use area (140) on the basis of their respective univocal identification information (A).

In a 78^{th} aspect according to any one of the previous three aspects, the step of loading (F8) into the permanent register (R) of events (E) relating to the digital twin (60) of each metal component (10) of the occurred condition of use and/or the step of further control (F9) are carried out by at least one simultaneous and massive operation of detecting the univocal identifying information (A) of the at least one identifier element (20) of each metal component (10) of the respective plurality of components in use in the storage/use area (140).

In a 79^{th} aspect according to the previous aspect, the occurred use and/or further control (F8) are carried out by means of the crossing of the respective metal components (10) through a respective detection gate (101') provided with at least one detection apparatus, in particular operating in radio frequency, optionally by means of at least one UHF antenna, in particular the crossing of the detection gate (101') by the metal components (10) being carried out by simultaneously crossing all of the metal components (10) to be detected or according to a sequential crossing of groups of metal components (10) of the same plurality of components to be detected.

In an 80^{th} aspect according to any one of the previous two aspects, the occurred use and/or further control step (F8) are carried out by the following steps:
- placing the metal components (10) of a relative plurality of components in a corresponding confined detection region (102') provided with one or more detection apparatuses, particularly operating in radio frequency, optionally by means of at least one UHF antenna, more optionally the confined detection region (102') being limited by a controlled chamber;
- sand massively detecting all of the univocal identification information (A) of the respective identifier elements (20) fixed to the respective metal components (10) in the confined detection region (102').

In an 81^{st} aspect according to any one of the previous three aspects, the occurrence of use and/or further control (F8) are carried out by the use of at least one interaction device (104), in particular portable, provided with at least one detection apparatus, in particular operating in radio frequency, optionally by means of at least one UHF antenna, the interaction device (104) being configured to communicate with the at least one identifier element (20) of each metal component (10) to simultaneously and massively enter into the permanent registers (R) of events (E) of the respective digital twins (60) of the metal components (10) new events (E) relating to new status conditions of the respective metal components (10).

In an 82^{nd} aspect according to any one of the previous seven aspects, it is also provided an additional step of loading (F10) into the permanent (R) register of events (E) relating to each of the respective digital twins (60) of a new event indicative of the change of a status condition of the respective metal component (10) to a decommissioning condition of the same metal component (10) in use in the storage/use area (140).

In an 83^{rd} aspect according to the previous aspect, the decommissioning condition corresponds to at least one of the following options:
- transferring the metal components (10) from the respective warehouse (161) of a distribution and/or rental point (160), in particular determined by the execution of an order of fulfillment corresponding to an occurred distribution or rental or to an occurred migration to a physical location different from the warehouse (161) of the distribution and/or rental point (160), optionally the additional step of loading (F10) of the condition of decommissioning of metal components (10) being carried out, simultaneously and massively, on a respective plurality of metal components (10), by means of an interaction with the respective identifier elements (20) and on the basis of the respective univocal identifying information (A) of the latter;
- de-installation of the metal components (10) of at least a portion of a respective scaffolding (1) of a respective construction site (150), optionally the additional step loading (F10) of the condition of decommissioning of each of the components (10) being carried out, simultaneously and massively, on a respective plurality of metal components (10) being removed from the respective scaffolding (1), by means of an interaction with the respective identifier elements (20) and on the basis of the respective univocal identification information (A) of the installed metal components (10).

In an 84^{th} aspect according to any of the previous two aspects, the decommissioned metal components (10) present in the storage/use area (140) are subjected to at least one additional control step (F11) in which it is verified whether the number and/or type and/or individual metal components (10) present in the storage/use area (140) correspond to the number and/or type and/or individual components (10) previously in use and/or previously entered the storage/use area (140) and/or previously expected in the storage/use area (140) based on the transfer order (T) previously created which reports the number and/or type of metal components (10) and/or individual metal components (10) being transferred to the storage/use area (140), the additional control step (F11) being carried out, by means of an optionally simultaneous and massive interaction with the identifier elements (20) of the decommissioned metal components (10) present in the storage/use area (140) on the basis of their respective univocal identification information (A).

In an 85^{th} aspect according to any one of the previous three aspects, the additional loading step (F10) into the permanent register (R) of events (E) relating to the digital twin (60) corresponding to each metal component (10) of the occurrence of the decommissioning condition and/or the additional control step (F11), are carried out by at least one simultaneous and massive operation of detecting the univocal identifying information (A) of the at least one identifier element (20) of each metal component (10) of the corresponding plurality of decommissioned components in the storage/use area (140).

In an 86^{th} aspect according to the previous aspect, the successful decommissioning and/or the additional control step (F11) is carried out by means of the passage of the respective metal components (10) through a respective detection gate (101') provided with at least one detection apparatus, in particular operating in radio frequency, optionally by means of at least a UHF antenna, in particular the crossing of the detection gate (101') by the metal components (10) being carried out by simultaneously passing all of the metal components (10) to be detected or according to a sequential crossing of groups of metal components (10) of the same plurality of components to be detected.

In an 87^{th} aspect according to any one of the previous two aspects, the occurred decommissioning and/or the additional control step (F11) being carried out by the following steps:
- placing the metal components (10) of a respective plurality of components in a corresponding confined detection region (102') provided with one or more detection apparatus, particularly operating in radio frequency, optionally by means of at least one UHF antenna, more optionally the confined detection region (102') being limited by a controlled chamber;
- simultaneously and massively detecting all of the univocal identification information (A) of the corresponding identifier elements (20) fixed to the corresponding metal components (10) in the confined detection region (102').

In an 88^{th} aspect according to any one of the three previous aspects, the occurred decommissioning and/or the additional control step (F11) being carried out by means of the at least one interaction device (104), in particular portable, provided with at least one detection apparatus, in particular operating in radio frequency, optionally by means of at least one UHF antenna, the interaction device (104) being configured to communicate with the at least one identifier element (20) of each metal component (10) to simultaneously and massively enter into the permanent register (R) of events (E) of the corresponding digital twin (60) of each metal component (10), new events (E) relating to new status conditions of the respective metal components (10).

In an 89^{th} aspect according to any one of the previous seven aspects, it is also provided an additional interaction step (F12) with the identifier element (20) of each decommissioned metal component (10) to enter (F12.1) in the permanent register (R) of events (E) of its digital twin (60) a status condition of the occurred exit of that metal component (10) from the storage/use area (140).

In a 90^{th} aspect according to the previous aspect, the entry of the occurred exit of the metal components (10) from the storage/use area (140) is carried out , optionally simultaneously and massively, on the permanent register (R) of events (E) of the digital twins (60) of the metal components (10) exiting the storage/use area (140), by means of an interaction with the identifier elements (20) of the metal components (10) themselves on the basis of their univocal identification information (A).

In a 91^{st} aspect according to any one of the previous two aspects, the metal components (10) exiting the storage/use area (140) are subjected to at least one auxiliary control step (F13) in which it is verified whether the number and/or type and/or individual metal components (10) exiting the storage/use area (140) correspond to the number and/or type and/or individual components (10) previously decommissioned and/or previously in use and/or previously entered the storage/use area (140) and/or previously expected in the storage/use area (140) based on the previously created transfer order (T) showing the number and/or type and/or individual metal components (10) being transferred to the storage/use area (140), the auxiliary control step (F13) being carried out, by means of an optionally simultaneous and massive interaction with the identifier elements (20) of the metal components (10) exiting the storage/use area (140) on the basis of their respective univocal identification information (A).

In a 92^{nd} aspect according to any one of the previous three aspects, the entry (F12.1) in the permanent register (R) of events (E) relating to the digital twin (60) of each metal component (10) of the occurred exit and/or the auxiliary control step (F13), are carried out by at least one simultaneous and massive operation of detecting the univocal identifying information (A) of the at least one identifier element (20) of each metal component (10) of the respective plurality of components exiting the storage/use area (140).

In a 93^{rd} aspect according to the previous aspect, the occurred output and/or auxiliary control step (F13) are carried out by means of passage of the respective metal components (10) through a respective detection gate (101') provided with at least one detection apparatus, in particular operating in radio frequency, optionally by means of at least one UHF antenna, in particular the crossing of the detection gate (101') by the metal components (10) being carried out by simultaneously crossing all of the metal components (10) to be detected or according to a sequential crossing of groups of metal components (10) of the same plurality of components to be detected.

In a 94^{th} aspect according to any one of the previous two aspects, the occurred exit and/or auxiliary control (F13) are carried out by the following steps:
- placing the metal components (10) of a respective plurality of components in a corresponding confined detection region (102') provided with one or more detection apparatuses, particularly operating in radio frequency, optionally by means of at least one UHF antenna, more optionally the confined detection region (102') being limited by a controlled chamber;
- simultaneously and massively detecting all of the univocal identification information (A) of the respective identifier elements (20) attached to the corresponding metal components (10) in the confined detection region (102').

In a 95^{th} aspect according to any one of the previous three aspects, the occurrence of output and/or the auxiliary control step (F13) are carried out by means of the at least one interaction device (104), in particular portable, provided with at least one detection apparatus, in particular operating in radio frequency, optionally by means of at least one UHF antenna, the interaction device (104) being configured to communicate with the at least one identifier element (20) of each metal component (10) to simultaneously and massively enter into the permanent register (R) of events (E) of the respective digital twin (60) of each metal component (10) new events (E) relating to new status conditions of the respective metal component (10).

In a 96^{th} aspect according to any one of the previous aspects, the plurality of metal components (10) comprises a number of metal components between 20 and 500.

In a 97^{th} independent aspect that may be combined with any one of the previous aspects or any one of the following aspects, it is provided a scaffolding (1), optionally modular, comprising a plurality of metal components (10) mutually engageable and combinable to define the structure of the corresponding scaffolding (1), the metal components (10) of the scaffolding (1) comprises of one or more of the following types of components: uprights (11); upright frames (15); ledgers/bracings (12) with respective clamp portions (12c); ledgers/bracings(18) with engagement joints (18a); planks (13); toeboards (14); guardrails (16); and, finials (17),
each of the metal components (10) of the scaffolding (1) being provided with at least one RFID Tag (30) defining a respective identifier element (20), the at least one RFID Tag (30) of each metal component (10) defining an univocal identifying information (A) of the respective metal component (10), the at least one RFID Tag (30) being fixed on each metal component (10) in a non-removable manner by gluing or welding whereby any attempt to remove it results in damage to the RFID Tag (30).

In a 98^{th} aspect according to the previous aspect, it is provided that:
- the at least one RFID Tag (30) fixed to each upright (11) is inserted within said upright (11) through a respective opening arranged in a respective end portion of said upright (11) or is externally fixed to the same, in particular by means of at least one collar; and/or,
- the at least one RFID Tag (30) fixed to each upright frame (15) is inserted within a post (15a) of the upright frame (15) through a respective opening arranged in a respective end portion of the upright frame (15) or is fixed externally to the same, in particular by means of at least one collar; and/or;
- the at least one RFID Tag (30) fixed to each ledger/bracing (12) with respective clamp portions (12c) is positioned within a cavity (12e) of a corresponding clamp portion (12c) of an end (12b) of the respective ledger/bracing (12), optionally the ledger/bracing(12) with respective clamp portions (12c) being provided with two RFID Tags (30) each defining the same univocal identifying information (A) of the respective metal component (10), each RFID Tag (30) being fixed within the same cavity (12e) of a respective clamp portion (12c) of the respective ledger and/or bracing (12); and/or,
- the at least one RFID Tag (30) fixed to each ledger/bracing (18) with respective engagement joints (18a) is externally fixed to the same, in particular by means of at least one collar or on a respective engagement joint (18a), in particular at one end (18d, 18e) of the respective engagement joint (18a) to enable the engagement joint (18a) to engage a corresponding engagement seat defined on another metal component (10), in particular an upright frame (15); and/or,
- the at least one RFID Tag (30) fixed to each plank (13) is placed on a respective short side (13b), below a corresponding engagement flange (13c), of the respective plank (13);
- the at least one RFID Tag (30) fixed to each toeboard (14) is positioned at a respective folded laminar end (14c) of the toeboard (14); and/or;
- the at least one RFID Tag (30) fixed to each guardrail (16) is externally fixed to the guardrail, particularly by means of at least one collar; and/or;
- the at least one RFID Tag (30) fixed to each finial (17) is externally fixed to the same, particularly by means of at least one collar.

In a further independent aspect 99^{th} that can be combined with any one of the previous aspects, it is provided a kit of mutually engageable and combinable metal components (10) to define a structure of a respective scaffolding (1), wherein each metal component (10) is provided with at least one RFID Tag (30) defining a respective identifier element (20), the at least one RFID Tag (30) of each metal component (10) defining an univocal identifying information (A) of the respective metal component (10), the at least one RFID Tag (30) being fixed to each metal component (10) in a non-removable manner by bonding or welding whereby any attempt to remove it results in damage to the RFID Tag (30), the kit comprising:
- at least one upright (11), optionally a plurality of uprights (11), the at least one RFID Tag (30) fixed on the upright (11) being inserted within said upright (11) through a respective opening arranged in a respective end portion of said upright (11) or being fixed to the outer surface thereof, in particular by means of at least one collar; and/or,
- at least one upright frame (15), optionally a plurality of upright frames (15), the at least one RFID Tag (30) fixed to each upright frame (15) being inserted within a post (15a) of the upright frame (15) through a respective opening arranged in a respective end portion of the post(15a) or being externally fixed to the same, in particular by means of at least one collar; and/or,
- at least one ledger/bracing (12) with respective clamp portions (12c), optionally a plurality of ledgers/bracings (12) with respective clamp portions (12c), the at least one RFID tag (30) fixed to the ledger/bracing (12) with respective clamp portions (12c) being positioned within a cavity (12e) of a respective clamp portion (12c) of an end (12b) of the respective ledger/bracing (12); and/or,

- at least one ledger/bracing (18) with respective engagement joints (18a), optionally a plurality of ledgers/bracings (18) with engagement joints (18a), the at least one RFID Tag (30) fixed to each ledger/bracing (18) with respective engagement joints (18a) being externally fixed to the same, in particular by means of at least one collar, or on a respective engagement joint (18a), in particular at an end of the respective engagement joint (18a) to enable the engagement joint (18a) to engage a respective receiving location defined on another metal component (10), in particular an upright frame (15); and/or,
- at least one plank (13), optionally a plurality of planks (13), the at least one RFID tag (30) fixed to the plank (13) being positioned on a respective one short side (13b) below a corresponding engagement flange (13c) of the respective plank (13); and/or,
- at least one toeboard (14), optionally a plurality of toeboards (14), the at least one RFID Tag fixed to each toeboard (14) being positioned at a respective folded laminar end (14c) of the toeboard (14); and/or,
- at least one guardrail (16), in particular a plurality of guardrails (16), the at least one RFID Tag (30) fixed to each guardrail (16) being externally fixed on the same, in particular by means of at least one collar; and/or,
- at least one finial (17), in particular a plurality of finials (17), the at least one RFID Tag (30) fixed to each finial (17) being externally fixed to the same, in particular by means of at least one collar.

In a 100^{th} aspect according to any one of the previous two aspects, each RFID Tag (30) is fixed to a respective metal component (10) by means of a corresponding protective capsule (40), optionally by the use of an adhesive fixing substance or by welding.

In a 101^{st} aspect according to the previous aspect, the protective capsule (40) has a basically plug-like shape and is configured to close the cavity of the upright (11) or of a post (15a) of an upright frame (15) through at least one respective end opening.

In a 102^{nd} aspect according to the previous aspect, the protective capsule (40) presents a body (40c) provided with:
- a first portion (40d) of protection and closure, optionally convex, to protect the RFID Tag (30) against shock and impact, particularly the first portion (40d) presenting substantially the same diameter, or a proximal diameter, to an outer diameter of the upright (11) in which it is applied; and,
- a second portion (40e), integral with the first portion (40d) arranged to be inserted into the upright (11) or post (15a) cavity of an upright frame (15), in particular, the second portion (40d) being provided with at least one annular bulge (40f) slightly larger in size than the inner diameter of the upright (11) or post (15a) cavity of an upright frame (15) such that the protective capsule (40) remains engaged at the opening the corresponding upright/post (11, 15a) by interference.

In a 103^{rd} aspect according to the previous aspect, a housing seat (40a) is cut out for the fixing and/or housing of the respective RFID Tag (30) between the first portion (40d) and the second portion (40e) of the protective capsule (40).

In a 104^{th} aspect according to any one of the previous two aspects, an engagement surface (40b), configured to support the adhesive fixing substance, is defined by a flat surface of the first portion (40d) that faces the second portion (40e) of the respective protective capsule (40).

In a 105^{th} aspect according to any one of the previous five aspects, the protective capsule (40) presenting a substantially collar-like shape so as to externally engage the structure of the respective upright (11) or post (15a) of an upright frame (15) or any other cylindrical or tubular structure of any other metal component (10) for forming a scaffolding (1), optionally the protective collar capsule (40) presenting a substantially cylindrical tubular structure with a structural break (40i) that allows its spread when engaged on a respective metal component (10). In a 106^{th} aspect according to the previous aspect, an inner surface of the protective capsule (40) at collar defines an engagement surface (40b) of the same configured to support the adhesive fixing substance, the engagement surface (40b) being a curved surface.

In a 107^{th} aspect according to the previous aspect, at least one housing seat (40a) for the fixing and/or housing of a respective RFID Tag (30) is cut into an area of the engagement surface (40b) of the protective capsule (40).

In a 108^{th} aspect according to any one of the previous five aspects, the protective capsule (40) fixable on each ledger/bracing (12) with respective clamp portions (12c) has a body (40c) substantially flat, optionally with a substantially square or rectangular outline, arranged to be positioned in the cavity (12e) of a clamp portion (12c) of the respective ledger/bracing (12) with respective clamp portions (12c), the body (40c) of such a protective capsule (40) presenting an inner side (40k) defining an engagement surface (40b) arranged to support the adhesive fixing substance.

In a 109^{th} aspect according to the previous aspect, the inner side (40k) of the protective capsule (40) also has at least one housing seat (40a) for fixing or housing a respective RFID tag (30).

In a 110^{th} aspect according to any one of the previous six aspects, the protective capsule (40) fixable on each ledger/bracing (18) with respective engagement joints (18a) presents:
- a body (40c) substantially wedge-shaped provided with a housing seat (40a) for the engagement of an RFID Tag (30) interposed between two fixing protuberances (40k) at one end (18d) of the respective engagement joints (18a) that is constrained to the ledger/bracing(18); or,
- a substantially cylindrical body (40c) within which an RFID Tag (30) is housed, the cylindrical body (40c) being screwable onto a free end (18e) of the respective engagement joint (18a).

In a 111^{th} aspect according to any of the previous seven aspects, the protective capsule (40) fixable on each toeboard (14) presents a body (40c) of semi-shell and/or semi-ovoid shape, the semi-shell-shaped body (40c) of the protective capsule (40) having a rounded outer side (40m) and a substantially flat inner side (40n) on which is defined an engagement surface (40b) arranged to support the adhesive fixing substance and at least one housing seat (40a) for fixing and/or housing a respective RFID Tag (30), optionally the engagement surface (40b) of the protective capsule (40) with a body (40c) with a semi-shell and/or semi-ovoid body being engageable to any flat surface of any metal component (10) .

In a 112^{th} aspect according to any one of the previous eight aspects, the protective capsule (40) fixable to each plank (13) has a body (40c) having a substantially flat inner side on which is defined an engagement surface (40b) arranged to support the adhesive fixing substance and at least one housing seat (40a) for fixing and/or housing a respective RFID Tag (30), the body (40c) of the capsule (40) having at least one curved portion (40p) configured to engage a respective edge of the body side (13b) of the respective plank (13).

### Brief description and drawings

A detailed description of one or more preferred embodiments of the invention, wherein:
- Figure 1 is a block diagram of a method of tracing metal scaffolding components according to the present invention;
- Figure 2 is a schematic representation of creating a digital twin in a corresponding digital environment of each of the metal components to be tracked, according to the tracking method according to the present invention;
- Figure 3 is a schematic representation of a digital twin, provided with a respective permanent register of events, of a respective metal component tracked by the tracking method according to the present invention;
- figure 4 is a schematic representation of the flow of recording the change of status conditions of each metal component from the arrangement of the same with the corresponding creation of the respective digital twin in the corresponding digital environment, as schematized in figure 2, to the permanence of the same metal component in a storage/use area and the final exit from that storage/use area;
- Figure 5 is a schematic representation of an RFID tag identifier element fixable on a respective metal component for the purpose of carrying out the tracking method shown in Figures 1 and 4, according to the present invention;
- Figure 6 is a schematic perspective view representation of a multidirectional scaffolding according to the present invention;
- Figure 7 is a schematic perspective view representation of a frame scaffolding according to the present invention;
- Figure 8 is an interrupted schematic perspective view of a metal scaffolding component, in this case a metal upright fitted with an RFID tag identifier element fixed to it by a first engagement mode and monitorable by the tracking method schematized in Figure 1;
- Figure 9 is an interrupted schematic perspective view of an additional metal scaffolding component, in this case an additional metal upright fitted with an RFID tag identifier element fixed to it by a second engagement mode different from the engagement mode shown in Figure 8 and monitorable by the tracking method schematized in Figure 1;
- Figure 10 is a schematic perspective view of an additional metal scaffolding component, in this case an additional metal upright fitted with an RFID tag identifier element fixed to it by a third engagement mode different from the engagement mode shown in Figures 8 and 9 and monitorable by the tracking method schematized in Figure 1;
- Figure 11 is a schematic perspective view of an additional metal scaffolding component, in this case a plank, fitted with an RFID tag identifier element fixed to it and monitorable by the tracking method schematized in Figure 1;
- Figure 12 is a schematic perspective view of an additional metal scaffolding component, in this case a toeboard provided with an RFID tag identifier element and monitorable by the tracking method schematized in Figure 1;
- Figure 13 is a schematic perspective view of an additional metal scaffolding component, in this case a ledger or bracing with clamp end portions provided with respective RFID tag identifier elements and monitorable by the tracking method schematized in Figure 1;
- Figure 14 is a schematic perspective view of an additional metal scaffolding component, in this case a guardrail, provided with respective RFID tag identifiers fixed to it and monitorable by the tracking method schematized in Figure 1;
- figure 15 is an interrupted schematic perspective view of an additional metal scaffolding component, in this case a ledger or bracing with respective engagement joints, provided with a corresponding RFID tag identifier element fixed to it different from the one in figure 14 and monitorable by the tracking method schematized in figure 1;
- figure 16 is an interrupted schematic perspective view of an additional metal scaffolding component, in this case a ledger or bracing with respective engagement joints, provided with a corresponding RFID tag identifier element and monitorable by the tracking method schematized in figure 1;
- Figure 17 is an interrupted schematic perspective view of an additional metal scaffolding component, in this case an upright frame, provided with at least one respective RFID tag identifier element fixed to it and monitorable by the tracking method schematized in Figure 1;
- Figure 18 is an interrupted schematic perspective view of an additional metal scaffolding component, in this case a finial, provided with a corresponding RFID tag identifier element fixed to it and monitorable by the tracking method schematized in Figure 1;
- Figures 19 to 21 are schematic perspective views of some embodiments of RFID protective capsules that can be fixed to metal components of cylindrical or tubular shape, such as the uprights shown in Figures 8 to 10 or the guardrail shown in Figure 14 or the upright frame shown in Figure 17 or the finial shown in Figure 18;
- Figures 22 and 23 are perspective views of another embodiment of the protective RFID tag capsule fixable to a respective clamp portion of a ledger or bracing, as shown in Figure 13;
- Figures 24 and 25 are perspective views of another embodiment of a protective RFID Tag capsule that can be fixed to a flat surface of any metal component, such as a folded end of a toeboard, as shown in Figure 12;
- Figures 26 and 27 are perspective views of another embodiment of a protective RFID Tag capsule that can be fixed to a flat surface of any metal component near a respective edge, such as a short side of a plank, as shown in Figure 11;
- Figure 28 is a perspective view of an additional embodiment of a protective RFID Tag capsule, which can be fixed to one end of an engagement joint constrained to a respective a ledger or bracing, as shown in Figure 15;
- Figure 29 is a perspective view of an additional embodiment of a protective RFID Tag capsule, which can be fixed to a free end of an engagement joint constrained to a respective a ledger or bracing, as shown in Figure 16.

### Detailed description

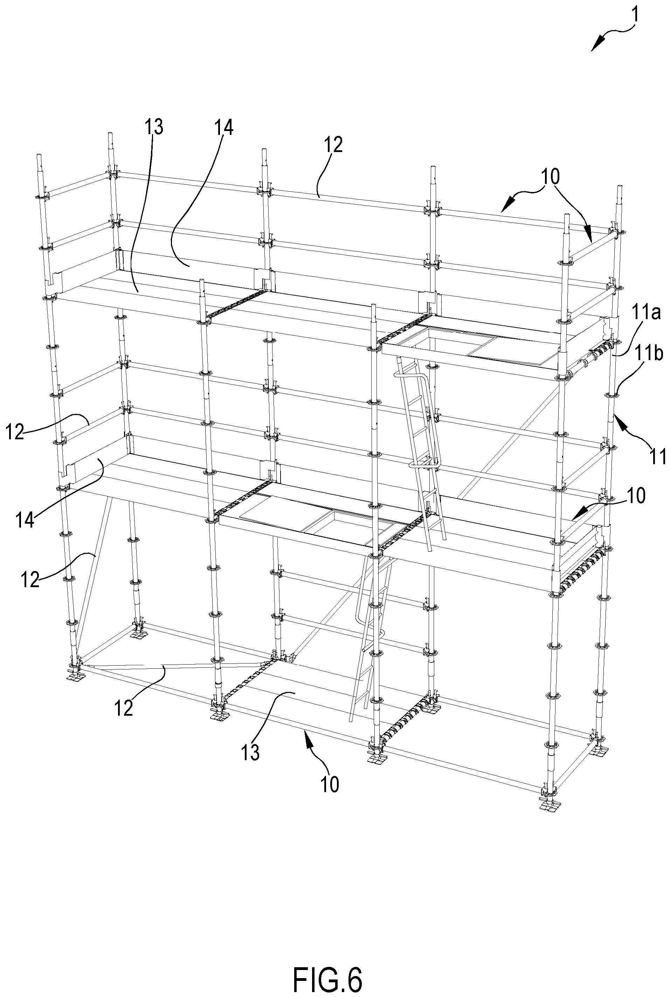

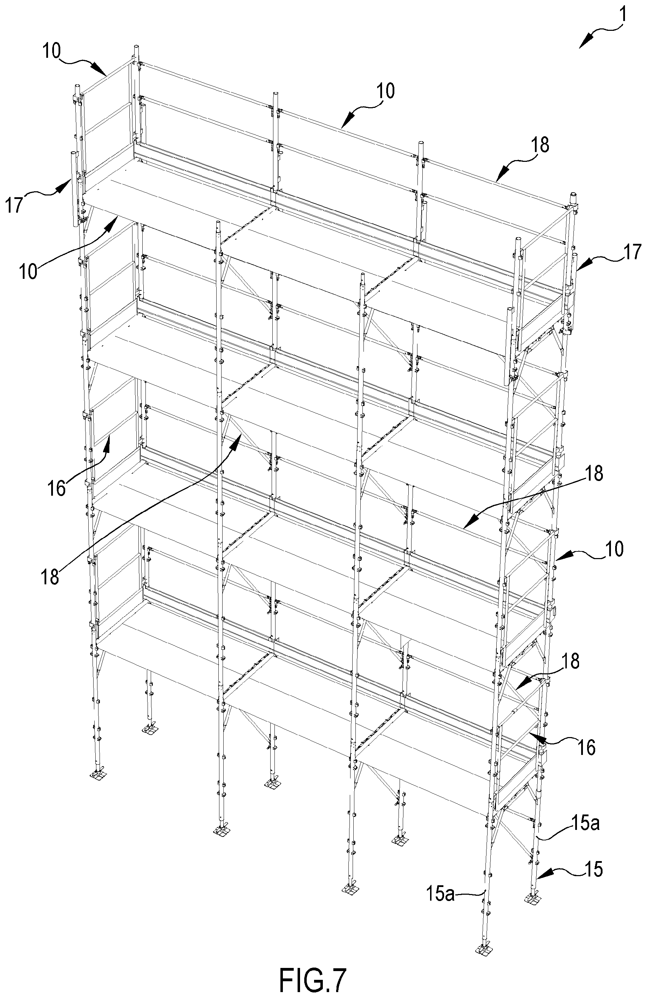

The method of tracking M1 of metal components of scaffolding used at a construction site and/or in storage at distribution and/or rental outlets according to the present invention enables the tracking and tracing of significant groups of metal components 10 for scaffolding 1 of various types (Figures 6 and 7), such as frame and facing scaffolding made from prefabricated components (Figure 7) or scaffolding with prefabricated uprights and crossbars (Figure 6), also known as multidirectional scaffolding, such as those standardized under UNI EN12810 and EN12811.

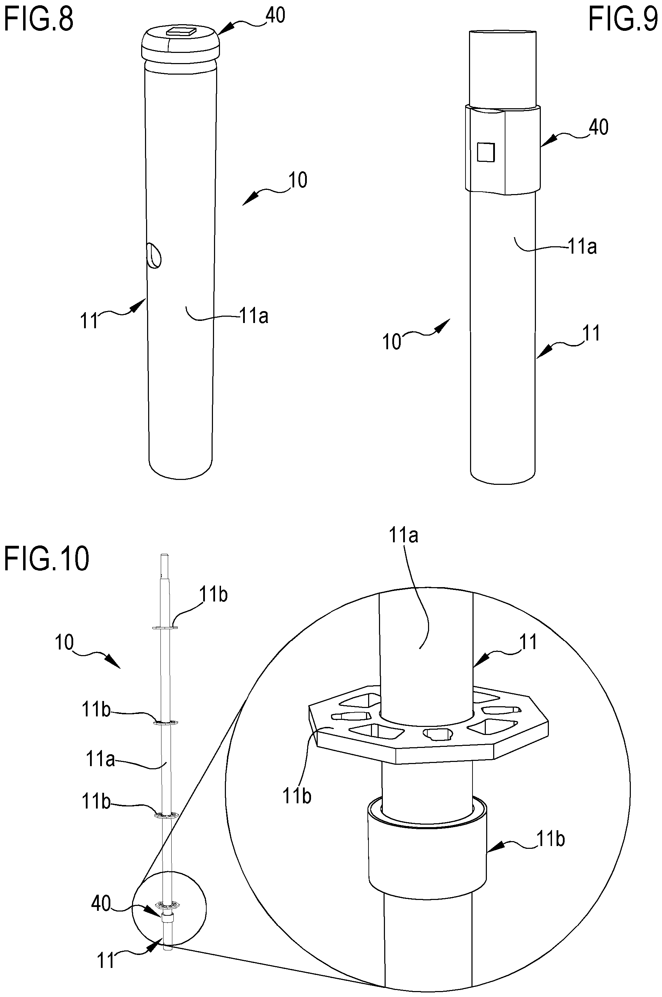

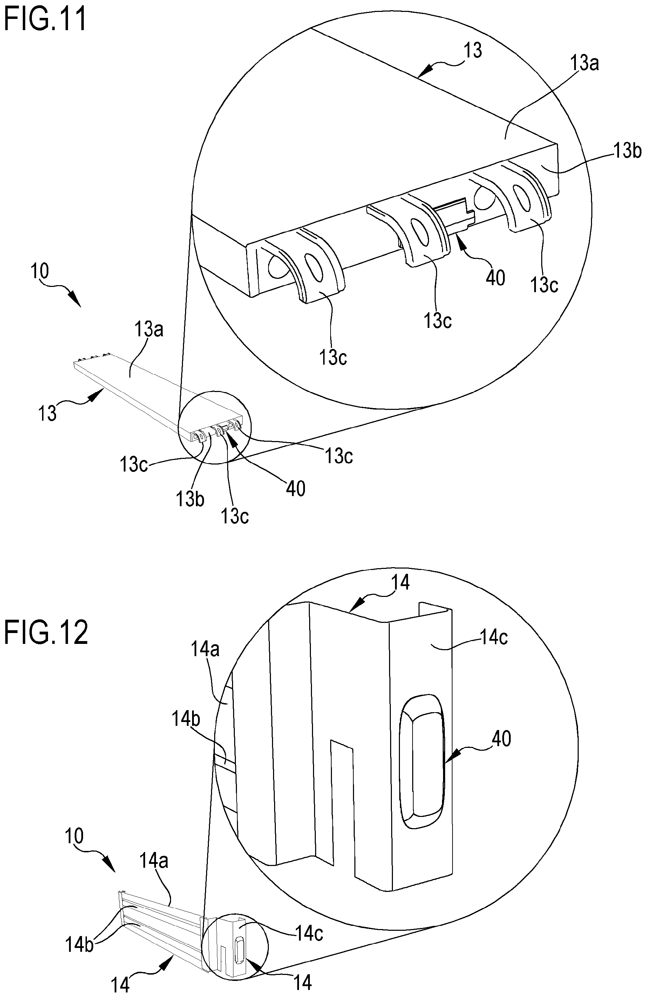

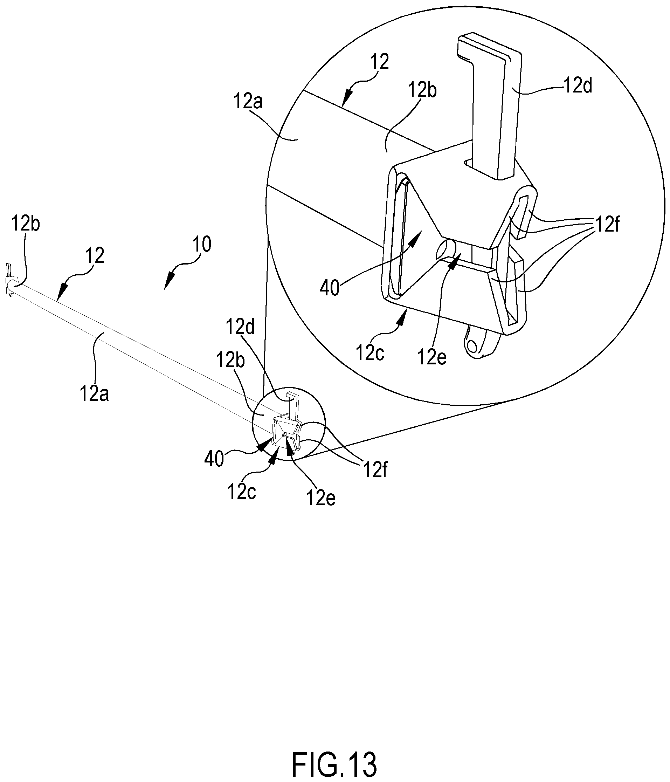

With reference to mutidirectional scaffolding 1 (Figure 6), the main metal components (10) that enable its formation include: uprights 11 (Figures 8 to 10); ledgers/bracings 12 with respective clamp portions 12c (Figure 13); planks 13 (Figure 11); and toeboards 14 (Figure 12).

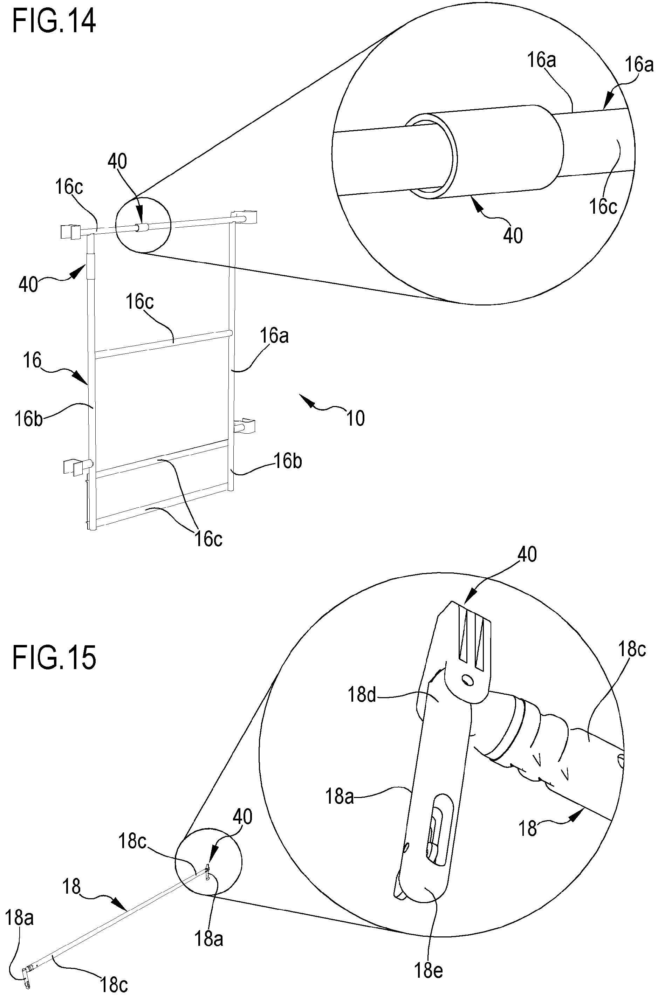

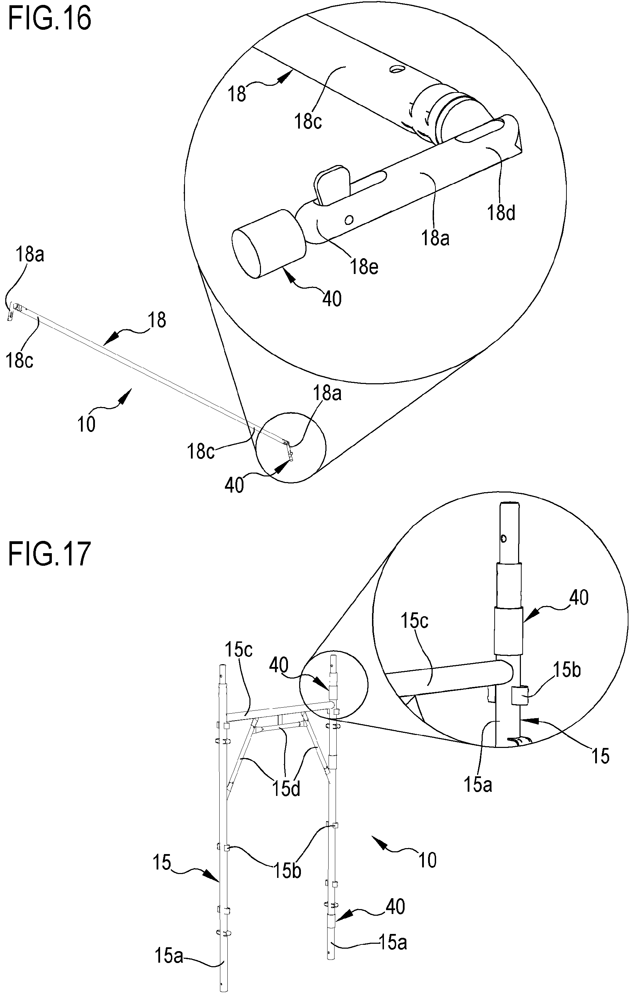

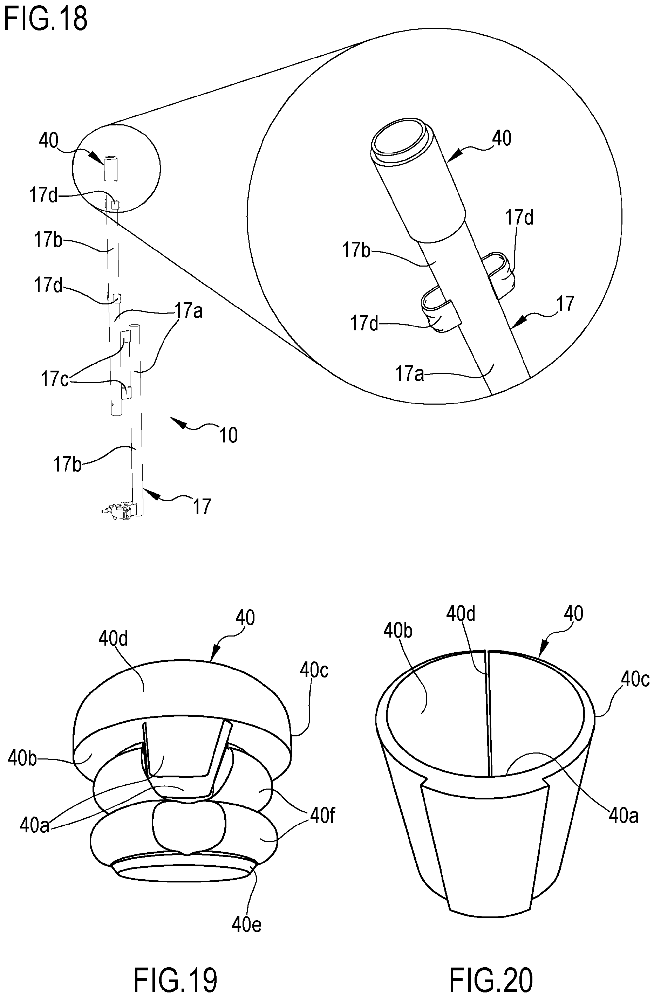

Referring instead to frame scaffolding 1 (Figure 7), the main components that enable their formation include: upright frames 15 (Figure 17), ledgers/bracings 18 with engagement joints 18a (Figures 15 and 16), planks 13 (Figure 11), guardrails 16 (Figure 14), and toeboards and finials 17 (Figure 18).

Going into the details of each of the metal components 10 of multidirectional scaffolding 1, the uprights 11 (Figures 8 to 10) have respective cylindrical and hollow 11a structures that are prepared vertically by axially inserting one upright 11 into the other and are provided with one or more rosettes 11b (Figures 6 and 10) by means of which additional metal components 10 of scaffolding 1, such as, for example, legders and bracings 12 with respective clamp portions 12c (Figure 13) can engage each other to define the overall structure of the respective scaffolding 1. Ledgers and bracings 12 (Figure 13) also have cylindrical 12a structures. In the case of multidirectional scaffolding 1, it is possible that the ledgers and bracings 12 terminate at their ends 12b with respective clamp portions 12c aimed at ensuring coupling with the rosettes 11b of the uprights 11 by means of respective clamping wedges 12d that cross both the respective clamp portions 12c of the respective ledgers and bracings 12 and the respective rosettes 11b of the uprights 11. The clamp portions 12c define corresponding cavities 12e that are partially closed by structural wings 12f of the same.

In the case of frame scaffolding 1, the ledgers and bracings 18 (Figures 15 and 16) have opposite ends 18c that terminate in respective engagement joints 18a, i.e. protuberances that allow engagement of the ledger or bracing 18 on another metal component 10 of scaffolding 1, usually an upright frame 15 provided with appropriate receiving seats 15b.

Upright frames 15 (Figure 17) each comprise a pair of parallel posts 15a suitably connected to each other by at least one transverse tubular portion 15c and respective reinforcing tubular elements 15d developing obliquely between the respective posts 15a and the respective transverse tubular portion 15c. The above mentioned receiving seats 15b are located and defined according to positions distributed along the posts 15a of the respective upright frames 15 .

Planks 13 (Figure 11), deputed to be used on both multidirectional scaffolding 1 (Figure 6) and frame scaffolding 1 (Figure 7) mostly have a substantially parallelepiped 13a structure which has, on its short 13b sides, a series of arched or hooked engagement flanges 13c.

Toeboards 14 have a substantially laminar structure 14a which, depending on the type of scaffolding 1, may be provided with appropriate structural reinforcing bends 14b.

In addition, toeboards 14 have respective folded laminar ends 14c. The toeboard 14 shown in Figure 12 is generally intended for the formation of multidirectional scaffolding 1. However, the version of toeboard suitable for frame scaffolding 1 does not differ much from that shown in figure 12.

Guardrails 16 (Figure 14), normally used on frame scaffolding (Figure 17) have a substantially rectangular 16a grid structure wherein two parallel 16b bearing portions joined by a plurality of perpendicular 16c crossing bars can be identified. Each guardrail 16 is fixed to a respective upright frame 15 between the posts 15a of the latter.

Finials 17 (Figure 18), which are also used to form the structure of frame scaffolding 1, have a structure 17a comprising two tubular elements 17b interconnected by two corresponding connection plates 17c. At least one of the two tubular elements 17b is provided with plurality of receiving seats 17d to receive engagement protrusions of other metal components 10, such as engagement joints 18a of the ledgers or bracings 18.

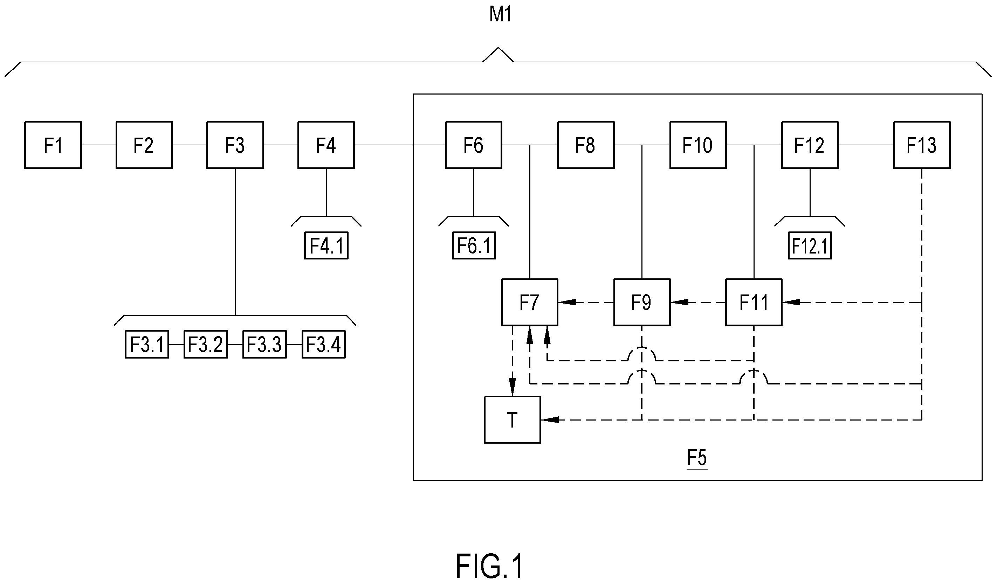

The tracing method M1 of the above mentioned metal components 10 of scaffolding 1, represented by means of the block diagram in Figure 1, includes a preliminary step of arranging F1 at least a plurality of metal components 10 for scaffolding 1, indicatively a plurality consisting of a number of metal components 10 comprised between 20 and 500 metal components.

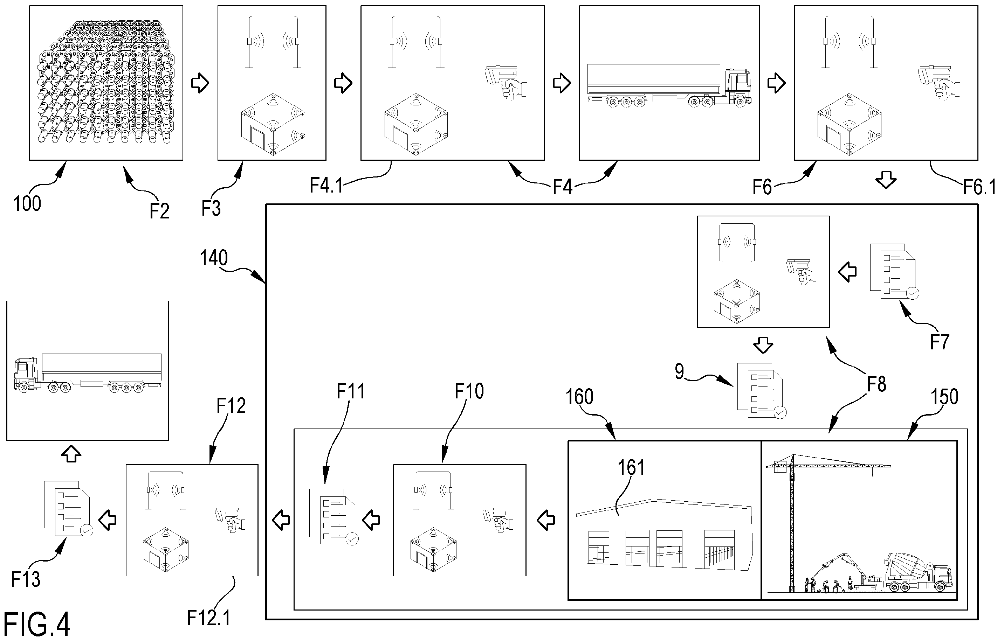

Generally, the arrangement step F of each plurality of metal components 10 involves the arrangement of the same type of metal components 10, for example, on one or more suitable transport carriers, such as pallets or similar transport pallets, or assembled together by means of suitable straps or similar wrapping bands or straps whereby each plurality of metal components 10 can be easily handled by means of a conventional loading forklift truck. The step of arranging F1 the pluralities of metal components 10 is usually carried out at a suitable arrangement station 100 (Figure 4) suitably set up within a respective production and/or storage and/or preparation area of the metal components to be tracked.

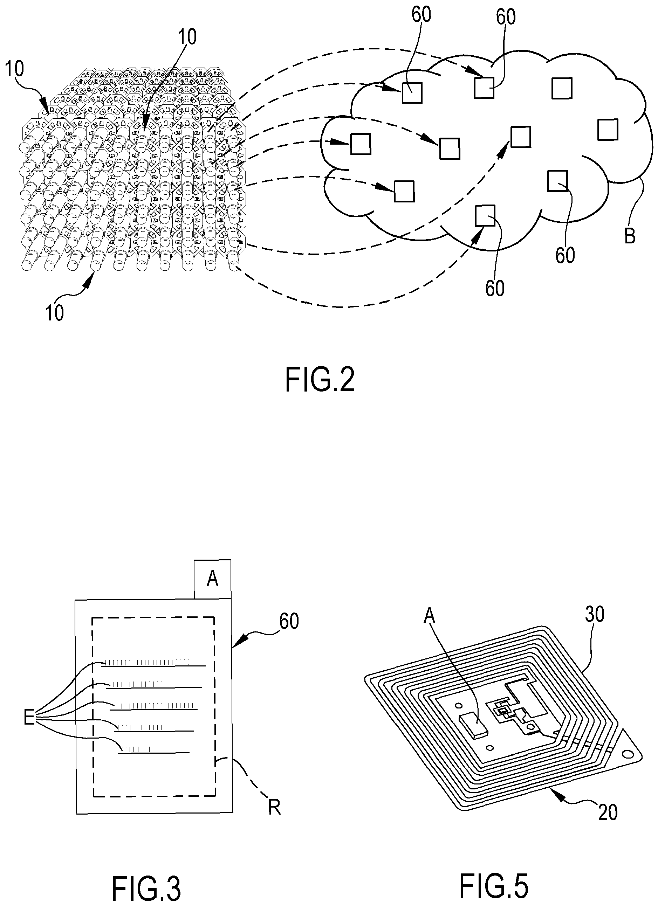

Subsequent to the arrangement step F1 of each plurality of metal components 10, of the same type, the tracking method M1 includes a fixing step F2 of at least one identifier element 20 (Figure 5) on each metal component 10 of the respective plurality of components. Each identifier element 20 is configured to be associated with one or more information data relating to the respective metal component 10.

Depending on the type of metal component 10 being arranged in the preparation station 100, the fixing step F2 may also involve the fixing of two or more identifier elements 20 on each metal component 10 of the previously arranged plurality of components. Normally, for metal components 10 such as uprights 11, planks 13, and toeboards 14, the fixing of an univocal identifier element 20 is sufficient, while for metal components 10 such as ledgers and bracings 12, 18, the fixing of two identifier elements 20 is preferable. Of course, the number of identifier elements 20 may also vary depending on the contingent requirements and structural shapes of the related metal components 10.

Advantageously, each identifier element 20 has an univocal unmodifiable identifying information A that identifies it from the other identifier elements 20.

In the case where two or more identifier elements 20 are fixed to a respective and same metal component 10, they all present the same univocal identifying information A.

According to an advantageous aspect of the invention, each identifier element 20 comprises a respective RFID Tag 30 (Figure 5) having a corresponding and univocal non-modifiable EPC code, which defines the univocal identifying information A of the respective identifier element 20. Preferably, the RFID Tag 30 is an RFID label Tag. However, for the purposes of the present invention, any other commercially available RFID Tag may possibly be used to identify the respective metal component 10.

The RFID Tag 30 of each identifier element 20 is detectable by radio frequency, in particular by means of at least one UHF antenna or a similar detection apparatus, optionally according to a detection range of 0.1 meters to 10 meters. Of course, the detection radius may vary according to contingent needs and is a function of the inherent characteristics of the RFID Tag 30 as well as the powers of the UHF antenna used for detecting the RFID Tag 30. In order to enable the RFID Tag 30 of each identifier element 20 to be easily fixed to a respective metal component 20, such RFID Tag 30 has dimensions between 5x5 mm and 80x80 mm, optionally between 10x10 mm and 55x55 mm, more optionally between 13x13 mm and 52x52 mm, in particular between 36x13 mm and 52x13mm.

In order to ensure a high standard of RFID Tag 30 detection of each identifier element 20 to be fixed or fixed on a respective metal component 10, while eliminating or minimizing any possible and undesirable interference due to the material from which the metal components 10 are made, each RFID Tag 30 fixed is provided with an anti-metal technology (also referred to as anti-metal or on-metal), i.e. a technology which uses the respective metal component 10 to amplify the signals between the RFID Tag 30 and any UHF detection antenna.

In order to facilitate the fixing of the RFID Tag 30 of each identifier element 20 on a respective metal component 10 of a relative plurality of components, the RFID Tag 30 is suitably housed in a protective capsule 40 which is fixable on a respective metal component 10.

According to a first embodiment of the present invention, the RFID Tag 30 of each identifier element 20 is housed in a respective housing 40a made in the body 40c of a respective protective capsule 40 in such a way that upon fixing of the latter to the respective metal component 10, the corresponding RFID Tag 30 is engaged, in particular, permanently, non-removably, on said metal component 10.

According to a second embodiment of the present invention, the RFID Tag 30 of each identifier element 20 is embedded in the body of a respective protective capsule 40 in such a way that the fixing of the latter to a corresponding metal component 10 also results in the consequent fixing of the corresponding RFID Tag 30 to that metal component 10.

More specifically, the protective capsule 40 housing the RFID Tag 30 of each identifier element 20 has at least one engagement surface 40b arranged to accommodate at least one adhesive fixing substance capable of ensuring permanent engagement of the protective capsule 40 to the respective metal component 10. In order to ensure satisfactory engagement of the protective capsule of the RFID tag 30 of each identifier element 20, the engagement surface 40b of the latter is at least partially, optionally completely, countershaped to at least an outer surface portion of the corresponding metal component 10. In this way, the coupling between the engagement surface 40b of the protective capsule 40 and the respective outer surface portion of the respective component 10 are perfectly coupled and attestable to each other.

According to a further embodiment of the present invention, the fixing step F2 of at least one identifier element 20 on each metal component 10 is carried out by fixing the respective RFID tag 30 by bonding the respective protective capsule 40 to the respective metal component 10. The bonding of the protective capsule 40 to the respective metal component 10 is carried out at the engagement surface 40b of the latter. In other words, the engagement surface 40b of the protective capsule 40 is used and exploited as a support for the adhesive fixing substance that should ensure the permanent engagement of the protective capsule 40 to the respective metal component 10.

In order to arrange the engagement surface 40b of each protective 40 capsule to accommodate and support the above-mentioned adhesive fixing substance, the engagement surface 40b of each protective capsule 40 is arranged by an appropriate surface treatment and cleaning involving the use of isopropyl alcohol or a similar cleaning substance.

Advantageously, the adhesive fixing substance comprises a one-component or two-component glue, epoxy or acrylic or polyurethane, which is deposited, for example by means of a dispensing gun or similar application tool comprising at least one dispensing nozzle, on the respective engagement surface 40b of the respective protective capsule 40. Thereafter, the protective capsule 40 is placed on the respective metal component 10 with the engagement surface 40b adhered to a respective surface portion of said metal component 10, according to a position suitable for ensuring the best adhesion between the protective capsule 40 and the metal component 10, allowing the detection of the RFID Tag 30 in any situation and protecting the same from possible impact and/or tampering attempts.

As an alternative to using of a glue with a liquid or semi-liquid or pasty or gel-like consistency, the adhesive fixing substance can be defined by, and in, a double-sided tape. Again, the adhesive fixing substance present on the double-sided tape is an epoxy or acrylic or polyurethane-based bonding substance, but in foam form. Bonding of the protective capsule 40 by the use of double-sided tape first involves the removal, from the latter, of a first protective film in order to make available a respective first adhesive portion of the double-sided tape. Once the first protective film has been removed from the double-sided tape, the first adhesive portion of the latter is applied to the respective engagement surface 40b of the respective protective capsule 40 of the RFID tag 30 of the respective identifier element 20 to be fixed. At this point, a second adhesive portion of the double-sided tape, facing away from the first adhesive portion, is made available by the removal of a second protective film. Removal of the second protective film makes the double-sided tape, and therefore the protective capsule 40 to which it is fixed, ready to be engaged to the respective metal component 10. The engagement surface 40b of the respective protective capsule 40 is placed in contact with an outer surface portion of the respective metal component 10 such that the second adhesive portion of the double-sided tape adheres at least partially, particularly completely, to the outer surface of the respective metal component 10.

Regardless of the mode of fixing of the protective capsule 40 on the respective metal component 10, the positioning of the protective capsule 40 is carried out according to a suitable position in order to ensure the best adhesion between it and the metal component 10, to allow the detection of the RFID Tag 30 in any situation and to protect the same from possible impacts and/or tampering attempts. Furthermore, the positioning of the protective capsule 40 and therefore of the corresponding identifier element 20 with the respective RFID Tag 30 on the respective metal component 10 is facilitated and simplified by the use of at least one suitably designed positioning tool. Once the protective capsule 40 has been positioned with its engagement surface 40b in contact with the respective outer surface portion of the respective metal component 10, the protective capsule 40 is held in that position for a period of time sufficient to ensure complete polymerization of the adhesive fixing substance (glue or double-sided tape), optionally a period of time of not less than 12 hours, more optionally not less than 18 hours, in particular not less than 24 hours, more particularly not less than 48 hours, preferably not less than 72 hours.

The retention of the engagement surface 40b of the respective protective capsule 40 in contact with the respective outer surface portion of the corresponding metal component 10 is carried out by the use of at least one respective appropriately designed retaining support. Advantageously, the retaining support is a magnetic retaining support that interacts significantly with the metal material of the metal components 10 to which the protective capsules 40 provided with respective RFID tags 30 of the corresponding identification elements 20 are fixed.

According to an advantageous aspect of the present invention, the positioning device includes and/or defines the retaining support or, conversely, the retaining support includes and/or defines the positioning device, such that the positioning and retention of each protective capsule 40 on the respective metal components 10, are ensured by the same tool, instrument, or utensil.

As an alternative, or in addition to the above described method of fixing which is based on the use of an adhesive fixing substance properly applied to the engagement surface 40b of each protective capsule 40 to be fixed to the respective metal components 10, each protective capsule 40 may also be provided with at least one fixing portion (not shown in the attached figures) configured to engage at least one structural portion of the respective metal component 10, whereby the fixing step F2 of the corresponding identifier element 20 is also carried out by engaging the protective capsule 40 to the corresponding metal component 10. In this situation, the fixing of the RFID tag 30 of a respective identifier element 20 to the respective metal component 10 is carried out and ensured by the interaction between the hooking portion of the corresponding protective capsule 40 and the respective structural portion of the respective metal component 10.

The protective capsule 40 of the RFID tag 30 varies depending on the type of metal component 10 to which it is fixed , as well as the position of fixing to that metal component 10. In fact, if one examines the uprights 11 shown in Figures 8 through 10, it is possible to see that depending on the different fixing position, the protective capsules 40 have different shapes and structures.

With respect to the upright 11 in Figure 8, the protective capsule 40 has a substantially cap-like shape in that it closes the cavity of the upright 11 through one of its end openings. As seen in Figure 19, the cap-like protective capsule 40 has a body 40c provided with a first portion 40d, which acts as a protective shield against shocks and impacts. The first portion 40d has substantially the same diameter, or a proximal diameter, to the outer diameter of the upright 11 into which it is applied. The cap-like protective capsule 40 also has a second portion 40e, integral with the first portion 40d and arranged to be inserted into the cavity of the upright 11. The second portion 40e is provided with two annular bulges 40f that are slightly larger than the inside diameter of the cavity of the upright 11 so that the cap-like protective capsule 40 remains engaged when the respective upright 11 is opened by interference. The housing 40a for the fixing of the respective RFID Tag 30 is cut out between the first portion 40d and the second portion 40e, while the engagement surface 40b is defined by a flat surface of the first portion 40d that faces the annular bulges 40f of the second portion 40e.

With reference, on the other hand, to the upright 11 in Figure 9, the protective capsule 40 has a substantially collar-like shape so that it can externally engage the structure of the respective upright 11, and in any case of any metal component 10 presenting a cylindrical or tubular shape.

According to the embodiment shown in Figure 20, the body 40c of the collar protective capsule 40 has a substantially cylindrical tubular structure with a structural break that allows it to spread apart when engaged to a respective upright 11. The inner surface of the collar protective capsule 40 defines the engagement surface 40b of the same. In addition, an area of the inner surface of the collar protective capsule 40 is cut into the housing 40a for the engagement of the respective RFID tag 30.

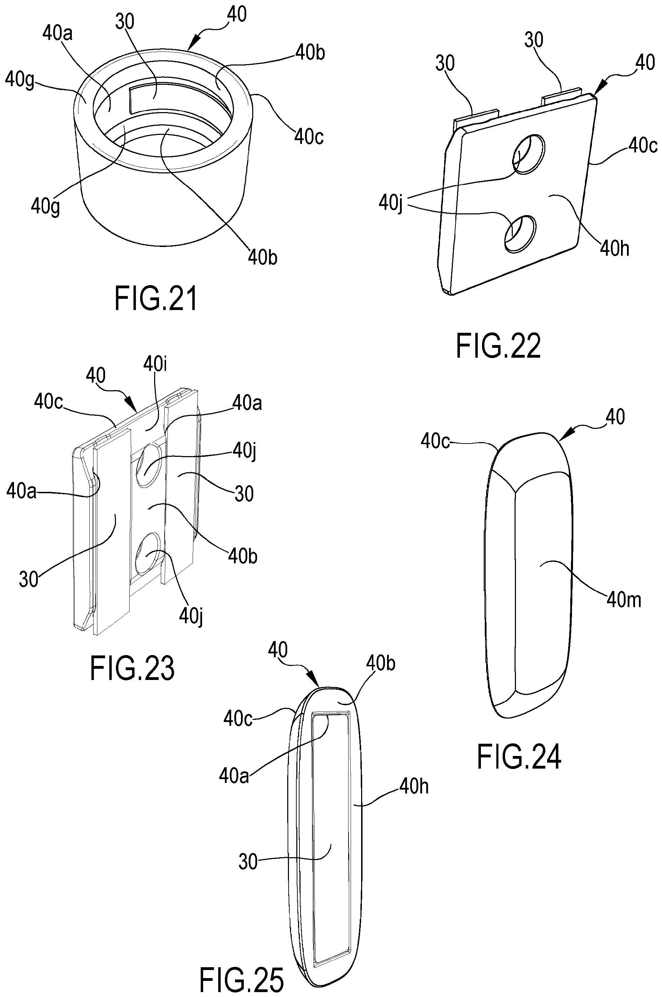

According to the embodiment shown in Figure 21, the body 40c of the collar protective capsule 40 has a substantially cylindrical tubular structure, one inner surface of which, interposed between two inner annular portions 40e, defines the housing 40a for the respective RFID Tag 30, while the two inner annular portions 40g define the engagement surfaces 40b of the same,

The same types of capsules described above are also suitable for the fixing of RFID Tags 30 to the posts 15a of the upright frames 15, to the load-bearing portions 16b and to the perpendicular crossing bars 16c of the guardrails 16, as well as to the tubular elements 17b of the finials 17, of frame scaffolding 1.

With reference to the ledger or bracing 12 with respective clamp portions 12c shown in Figure 13, the protective capsule 40 (Figures 22 and 23) has a substantially flat body 40c with a substantially square or rectangular outline arranged to be placed in the cavity 12e of the clamp portion 12c of the respective ledger or bracing 12. The body 40c of such a protective capsule 40 has an outer side 40h (Figure 22) and an inner side 40i (Figure 23) defining the engagement surface 40b of the protective capsule 40 on which two housing housings 40a are provided for the fixing of two respective RFID tags 30. In addition, the protective capsule 40 is provided with two through openings 40j for the engagement of respective fixing buttons (not shown) that engage, through these through openings 40j, respective openings present in the cavity 12e of the clamp portion 12c of the ledger or bracing 12.

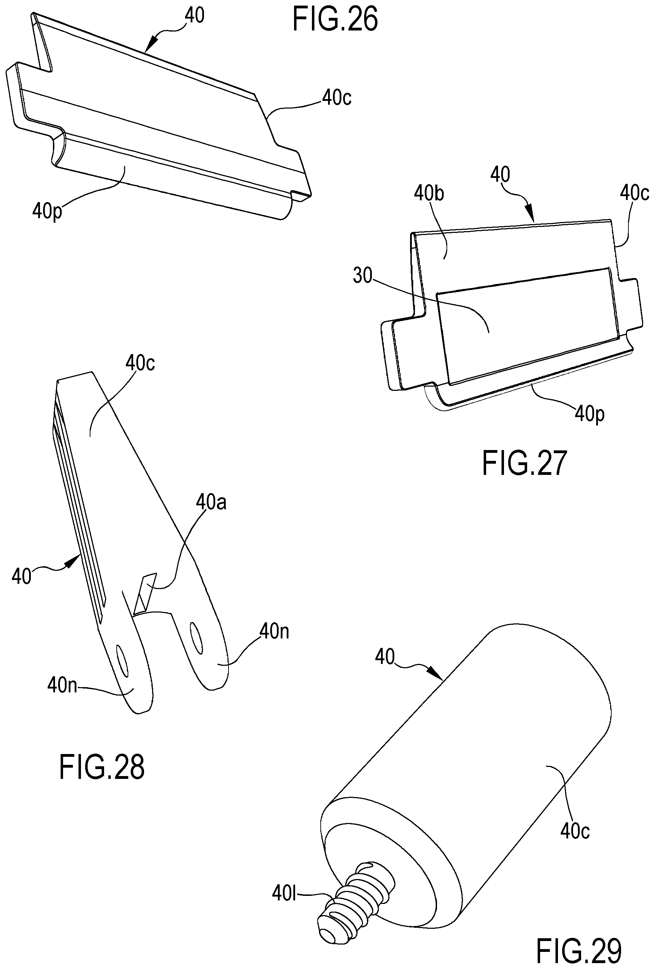

With reference to the ledger or bracing 18 with respective engagement joints 18a shown in Figure 15, the protective capsule 40 (Figure 28) has a substantially wedge-shaped body 40c provided with a housing 40a for the engagement of an RFID Tag 30 interposed between two fixing protuberances 40k at one end 18d of the respective engagement joints 18a that is constrained to the ledger/bracing 18.

Referring instead to the ledger or bracing 18 with respective engagement joints 18a shown in Figure 16, the protective capsule 40 (Figure 28) has a substantially cylindrical body 40c inside which an RFID Tag 30 can be housed. The cylindrical body 40c is provided with a threaded protrusion 40l that is screwable onto a free end 18e of respective engagement joint18a.

With reference to the toeboard 14 shown in Figure 12, the protective capsule 40 (Figures 24 and 25) has a half-shell body 40c and/or semi-ovoid shape. As can be seen in Figures 14 and 15, the half-shell body 40c of the protective capsule 40 has a rounded outer side 40m and a substantially flat inner side 40n on which the engagement surface 40b and a housing 40a for fixing a respective RFID tag 30 are defined.

With reference to the plank 13 shown in Figure 11, the protective capsule 40 (Figures 26 and 27) has a body 40c with a substantially flat inner side 40o on which an engagement surface 40b arranged to support the adhesive fixing substance and at least one housing seat 40a for fixing and/or housing a respective RFID Tag 30 are defined. The body 40c of the protective capsule 40 further has at least one curved portion 40p configured to engage a respective edge of the short side 13b of the respective plank 13.

As an alternative to, or in addition to, the fixing step F2 of the protective capsule 40 to the respective metal component is carried out by executing at least one welding operation of a metal structure (not shown in the attached Figures) suitably associated with the protective capsule itself. In detail, the welding operation of the metal structure associated with the protective capsule 40 involves the execution of a spot welding at one or more portions of the metal structure emerging from the protective capsule 40 and in contact relationship with the target surface of the respective metal component 10.

According to a first embodiment of a protective capsule 40 weldable to a metal component 10 of a scaffolding 1, the respective metal structure comprises a one-piece plate, flat or curved depending on the target metal component 10 and the shape that the protective capsule 40 must have in order to be fixed to said metal component 10. The one-piece plate of the metal structure of the protective capsule 40 is co-moulded thereon and has a main portion that supports, in direct contact, a respective RFID tag 30. The main portion of the one-piece plate of said metal structure and the respective RFID Tag 30 which is fixed to said metal structure are enclosed, preferably hermetically, by the protective capsule itself. The one-piece plate of the metal structure of the protective capsule 40 further has one or more attachment portions or appendages emerging and protruding from said capsule to enable welding operations of the metal structure and, therefore, of the protective capsule 40 with the respective RFID Tag 30 to the respective metal component 10 of a scaffolding 1.

According to a second version of the protective capsule 40 weldable onto a metal component 10 of a scaffolding 1, the respective metal structure also comprises a one-piece plate having a shape which is more adapted to the shape of the capsule and of the respective target metal component 10, the one-piece plate of which supports, in direct contact, the intended RFID tag 30, so that the same is hermetically isolated with respect to the outside. However, in this case, the one-piece plate of the metal structure does not provide any emerging or protruding portion from the protective capsule 40, remaining totally within the same. Additional metal plates detached and separated from the one-piece plate of the metal structure bearing the RFID tag 30 are provided and joined to the protective capsule 40, for example by co-moulding or by other joining and joining techniques, in order to provide structural elements suitable for spot welding on the respective metal component 10 of a scaffolding 1.

Since the metal components 10 of the scaffolding 1 are permanently arranged outdoors and are therefore permanently exposed to precipitation and different climatic conditions, the sealing of the RFID tag 30 by the protective cap 40 ensures the technically advantageous effect of preventing undesirable ingress of water, moisture and dirt over time.

The one-piece plate of the metal structure of the protective capsule 40 is advantageously made of stainless steel, a material which is both optimally suited for supporting the respective RFID tag 30 and for being welded to the respective metal component 10 of a frame 1.

Advantageously, spot welding allows the protective capsules 40 of the RFID tags 30 to be joined quickly and conveniently using welding devices and equipment commonly used in industry. Of course, different types of spot welding can be envisaged, but the preferred one, given the metallic nature of the components 10 of the scaffolding 1 and the structures associated with the protective capsules 40 of the RFID tags 30, is resistance welding.

In order to give to the protective capsules to be used for fixing the identifier elements 20 on the respective metal components 10 high mechanical and/or physical properties, such as, for example, high impact and shock resistance, high resistance to chemical agents, high resistance to weathering typical of outdoor uses, and transparency to radio frequencies, particularly UHF frequencies, the protective capsules 40 of the RFID tags 30 of the identifier elements 20 to be fixed or fixed on the respective metal components 10 are made of a polymeric material.

In some situations, it is preferable for protective capsules 40 to be made of TPU thermoplastic polyurethane so that they exhibit high resistance to the impacts or shocks and weathering to which metal components 10 are subjected when installed outdoors. Since TPU polyurethane is an elastomer, the protective capsules 40 made from this material exhibit high absorption of impact energy because they are able to deform elastically without reaching the point of rupture or yielding under typical use conditions. Thus, protective capsules 40 deform by absorbing the shocks or impacts typical in the handling and use of metal components 10 in warehouses, during transportation, and at construction sites.

Advantageously, protective capsules 40 have a hardness expressed in Shore A of not less than 80A, optionally not less than 90A, in particular substantially equal to 95A.

In other situations, it is preferable for the protective capsules 40 to be made of high-density HDPE polyethylene, especially when RFID tags 30 of the respective identification elements 20 are attached to metal components 10 such as ledgers and bracings 12, 18. Protective capsules 40 made of high-density HDPE polyethylene have high resistance to tampering attempts, as well as high UV and chemical resistance.

However, it is also possible to provide for protective capsules 40 to be made of acrylonitrile butadiene styrene ABS or high-impact polystyrene HDPS or polycarbonate PC or a mixture of amorphous thermopolymer and ASA/PC polycarbonate.

The protective capsules 40 of the RFID tags 30 of the respective identifier elements 20 to be attached or fixed on the respective metal components 10 are obtained and created by a forming process for additive manufacturing or injection molding or thermoforming, among which, injection molding and thermoforming are preferred over additive manufacturing as they enable the production of protective capsules 40 with high and superior performance. Also co-moulding can be carried out for manufacturing the protective capsules 40.Once the step of fixing F2 all identifier elements 20 with their respective RFID tags 30 on the corresponding metal components 10 of the plurality of components arranged in the preparation station 100 is completed, the tracking method M1 includes at least one step of creating F3 (schematized in Figure 2) an univocal digital twin 60 of each metal component 10 in a corresponding digital environment B.

Advantageously, the creation F3 of the univocal digital twins 60 relating to the metal components 10 of the respective plurality of arranged components F2 is performed by carrying out at least one simultaneous and massive detection operation F3.1 of the univocal identification information A present in each of the identifier elements 20 fixed to the metal components 10. Such a step of creating F3 the univocal digital twin 60 of each metal component 10 is carried out simultaneously and massively by crossing all of the respective metal components 10 through a detection gate 101 (Figure 4) provided with at least one radio frequency detection apparatus having at least one UHF antenna. The crossing of the detection gap 101 by the metal components 10 of a respective plurality of components is accomplished by simultaneously respective all of the metal components 10 through the detection gate 101 or by sequentially crossing discrete groups of metal components 10 of the same plurality of components. The detection gate 101 operates as a scanning device that recognizes and identifies each identifier element 20 present on the crossing metal components 10.

In addition to, or as an alternative to, the use of the above mentioned detection gate 101, the step of creating F3 the univocal digital twin 60 in the corresponding digital environment B of each metal component 10 of one or more plurality of components of the same type is carried out by using a confined detection region 102, in particular a controlled chamber provided with at least one radio frequency detection apparatus having at least one UHF antenna. In this case, in order to create the digital twin 60 relating to each metal component 10 of the respective plurality of components, the plurality of metal components 10 of the same type is positioned and stationed within the corresponding confined detection region 102 to be subsequently subjected to a simultaneous and massive detection operation F3.1 of the univocal identification information A of the identifier elements 20 attached to all metal components 10 located within the confined sensing region 102.

The simultaneous massive F3.1 detection operation of the univocal identification information A of the identifier elements 20 of the metal components 10 results in the execution of an F3.2 assignment operation, for each metal component 10, of the univocal identification information A of the respective at least one identifier element 20. Going into the details of the detection operation F3.1, the provided detection apparatus is configured to detect the univocal EPC code of the RFID Tag 30 of each identifier element 20 as its univocal identification information A to be assigned F3.2 to the respective metal component 10 as its univocal identification information.

In the case where two or more identifier elements 20 are fixed to a respective same metal component 10 of a respective plurality of components under detection, such as ledgers and bracings 12, 18, the operation of detecting the univocal identification information A is carried out by detecting the univocal EPC code of the RFID Tag 30 of only one of the identifier elements 20 fixed to the same metal component 10, as the other identifier element(s) 20 fixed to the same metal component 10 have the same univocal EPC code.

The simultaneous massive creation step F3 of the univocal digital twin 60 in the corresponding digital twin environment B of each metal component 10 under detection also includes an assignment operation F3.3, for each digital twin 60 under creation, of the corresponding type of the respective metal components 10 under detection. In particular, when metal components 10 of the same component type undergo a creation step F3 of the respective digital twins 60, each digital twin 60 being created is matched with the univocal identification information A of the respective identifier element(s) 20 fixed to the respective metal component 10, as well as an indication of the type of the respective metal component 10 for which the respective digital twin 60 was created.

Furthermore, the simultaneous massive creation step F3 of each digital twin 60 in the corresponding digital environment B of each metal component 10 under detection includes, or is followed by, at least one creation operation F3.4, for each digital twin 60 created, of an univocal permanent register R of events E (shown schematically in Figure 3), which is arranged to receive by entering and/or loading one or more data or information or events E indicative of the change of one or more status conditions of the respective metal component 10, from the time of creation of the respective digital twin 60.

Advantageously, the permanent register R of events E of each digital twin 60 created is not removable or erasable from the respective digital environment B so it perpetually remains in that digital environment B linked to the corresponding digital twin 60. Each event E entered into the permanent register R of events E relating to the digital twin 60 of each metal component 10 is queued to the event(s) E previously entered into the same permanent register R of events E. In addition, each event E entered into that permanent register R of events E is not removable or erasable. In fact, the permanent register R of events E allows only the entry or loading of new E events, but does not allow the deletion or modification of previously entered events E.

Each event E entered into the permanent register R of events E usually corresponds to a change of a status condition of the respective metal component 10 for which the respective digital twin 60 replays the actual status condition of the respective metal component 10. Advantageously, the entry or loading into the permanent register R of events E relating to the digital twin 60 of each metal component 10 of new data or information or events E also indicative of the change of one or more status conditions of the latter is carried out, optionally automatically, whenever the actual status condition of the metal component 10 is detected and recorded.

Preferably, at the time of creation F3 of the respective to the digital twin 60 of each metal component 10 under detection, at least the status condition indicative of the occurred creation of the univocal digital twin 60, together with the type of the detected metal component 10, is entered into the respective permanent register R of events E.

The digital environment B in which the digital twins 60 of the metal components 10 are created comprises a computer network, such as a LAN, MAN, WAN or SAN. Preferably, the digital environment B is based on a distributed registry technology or system that can be read and modified by multiple nodes in a network, such as a blockchain. Therefore, the digital environment B includes a computer network, such as the Internet, based on a blockchain technology and/or platform.

After the creation step F3 relating to the digital twin 60 of each metal component 10 of the corresponding plurality of components has been completed, the tracking method M1 includes at least one transfer step F4 of each metal component 10 of the corresponding plurality of components subjected to the creation F3 of the respective digital twin 60 to a corresponding storage/use area 140 of such metal components 10, particularly a construction site 150 or a distribution and/or rental point 160 of such metal components 10 (Figure 4).

The transfer F4 of each metal component 10 in the storage/use area 140 is carried out after the entry F4.1 in the permanent register R of events E of the digital twin 60 of each metal component 10 of an event E indicative of an occurred transfer status condition. The entry operation F4.1 of the occurred transfer is advantageously carried out simultaneously and massively on the permanent register R of events E of the digital twins 60 relating to the respective metal components 10 of the plurality of components being transferred by an interaction with the identifier elements 20 of the metal components 10 themselves.

Similar to the creation step F3 of the respective digital twin 60 of each metal component 10 of the respective plurality of components, the entry operation F4.1 mentioned above is carried out by using at least one corresponding 101' detection gate (Figure 4) or by using at least one additional 102' confined detection region (Figure 4).

With reference to the detection gate 101' used prior to the transfer step F4, the operation of entering F4.1 into the respective permanent register R of events E of each digital twin 60 of the respective occurred transfer condition is carried out simultaneously and massively by crossing all of the metal components 10 to be transferred through the respective detection gate 101' which is provided with at least one radio frequency detection apparatus having at least one UHF antenna. The crossing of the detection gate 101' by the metal components 10 to be transferred is done by simultaneously crossing all of the metal components 10 through the detection gate 101' or by sequentially crossing discrete groups of metal components 10 of the same plurality of components. Also in this situation, the detection gate 101' operates as a scanning device that recognizes and identifies each identifier element 20 to RFID tag 30 present on the metal components 10 crossing through the detection gate 101' by recognition of the relevant identifying information A.

As an alternative to the 101' detection gate just mentioned, the use of a confined detection region 102' can be defined by a controlled chamber provided with at least one radio-frequency detection apparatus having at least one UHF antenna. In this case, the metal components 10 to be stored are stationed within the confined detection region 102' to be subjected to a detection operation consisting of detecting the univocal identification information A defined by the EPC codes of the respective RFID tags 30 of the identifier elements 20 of the metal components 10 to be transferred. By this detection operation, the new condition of the occurred transfer into the storage/use area 140 is entered F4.1 simultaneously and massively into the permanent register R of events E relating to the digital twin 60 of each metal component 10 being transferred, optionally automatically.

As an alternative to the detection gate 101' and/or the confined detection region 102', the entry operation F4.1 of the transfer step F4, may also be carried out by the use of at least one interaction device 104, in particular portable, configured to communicate with the RFID tag identifier elements 20 of each metal component 11 to be transferred. The interaction device 104 is also provided with at least one dtection device operating in radio frequency, optionally by means of at least one UHF antenna. In detail, the portable interaction device 104 includes an RFID Tag reader gun 30 having a wide range.

If two or more identifier elements 20 are fixed to each of the same metal component 10 of the relating plurality of components, such as in the case of the ledgers or bracings 12, 18, the operation of detecting the univocal identification information A is carried out by detecting the univocal EPC code of the RFID Tag 30 of only one of the identifier elements 20 fixed to the same metal component 10, as the other identifier element(s) 20 fixed to the same metal component 10 have the same univocal EPC code. In this way, it is possible to recognize each metal component 10 under detection even if it has two or more RFID Tags 30.

In contrast to the creation step F3 relating to the digital twin 60 of each metal component 10 which has to be carried out on metal components of the same type, the detection operation F4.1 of the occurred transfer condition during the transfer step F4 can also be carried out on a mixed plurality of metal components 10 since such metal components 10 have already been univocally replicated in the digital environment B by the creation of a corresponding and univocal digital twin 60. Therefore, should a mixed plurality of metal components 10 undergo the detection operation aimed at transferring them to the storage/use area 140, the different metal components 10 would be detected and recognized by means of the corresponding univocal EPC code of the RFID Tag(s) 30 of the respective identifier elements 20, with an automatic recording of the respective new status condition on the permanent register R of events E of the respective digital twin 60.

The entry operation F4.1 described above of the transfer step F4 is followed by at least one interaction step F5 with the identifier element 20 of each metal component 10 being transferred whenever each metal component 10 has a change of status or is subject to a significant new data or information, particularly inherent to the storage/use area 140, the permanent register R of events E of the digital twin 60 relating to each metal component 10 allows to keep track of every data and/or information and/or status change relating to each metal component 10 from the moment of creation F3 of the respective digital twin 60 in the corresponding digital environment B and during the entire stay of the metal component 10 in the storage/use area 140.

The interaction step F5 includes a series of steps and operations that mainly affect the permanence of metal components 10 in the storage/use area 140 from the time of entry within that storage/use area 140 to the time of exit.

Going into more detail, the interaction step F5 provides, subsequent to the transfer step F4, an interaction step F6 with the identifier element 20 of each metal component 10 entering within the storage/use area 140 to enter F6.1 into the permanent register R of events E of the respective digital twin 60 a status condition of the occurred entry of said metal component 10 into the storage/use area 140. Such entry operation F6.1 of the condition of the occurred entrance of the metal components 10 into the storage/use area 40 is carried out, advantageously simultaneously and massively, in the permanent register R of events E of the digital twins 60 of the plurality of metal components 10 entering the storage/use area 140, by an interaction with the identifier elements 20 of the metal components 10 themselves on the basis of the respective univocal identification information A.

Once the condition of the occurred entrance into the storage/use area 140 is recorded in the permanent registers R of events E relating to the digital twins 60 corresponding to the entering metal components 10 of said storage/use area, the tracking method M1 may include a control step F7 wherein it is verified whether the number of the entering metal components 10 and/or the type thereof and/or the individual components 10 of the plurality of the entering components corresponds to the number of the metal components 10 and/or the type thereof and/or the individual components 10 expected in the storage/use area 140 based on a previously created transfer order T showing the number and/or the type and/or the individual metal components 10 to be transferred to the storage/use area 140.

The control step F7 is advantageously carried out, by a simultaneous and massive interaction with the identifier elements 20 of the metal components 10 entering the storage/use area 140 based on their respective univocal identification information A.

The entry operation F6.1 of the event E relating to the new status condition of the occurred entry into the permanent register R of events corresponding to the digital twin 60 relating to each metal component 10 and/or the control step F7 mentioned above, are carried out by at least one simultaneous and massive operation of detecting the univocal identifying information A of the at least one identifier element 20 of each metal component 10 of the respective plurality of components entering the storage/use area 140. The entry F6.1 of the occurred entry and/or the control step F7 may be carried out by means of additional detection gates 101, 101' or additional confined detection regions 102, 102' or additional interaction devices 104 such as those previously described. In addition, it may be provided that a plurality of detection apparatuses capable of interacting with the RFID Tag 30 identifier elements 20 of the metal components 10 may be deployed in the storage area in order to carry out the entry operation F6.1 and/or the control step F7.

Subsequent to the entry step F6 or subsequent to the control step F7, if any, the tracking method M1 provides a loading step F8 in the permanent register R of events E relating to each of the respective digital twins 60 of the respective metal component 10 entering the storage/use area a new event indicative of the change of a status condition of the respective metal component 10 from the condition of the occurred entry to the condition of use of the same in the storage/use area 140.

In case the storage/use area 140 corresponds to a distribution and/or rental point of the metal components 10, the use condition of those metal components 10 corresponds to a storage condition of the metal components 10 in a respective warehouse 161 of the distribution and/or rental point 160 according to respective stationing positions.

In the case where the storage/use area 140 corresponds to a construction site 150, the condition of use of the metal components 10 corresponds to a condition of installation of the metal components 10 to form and define at least a structural portion of a respective scaffolding 1.

The step of loading F8 the use condition of each of the components 10 into the permanent register R of events E associated with the respective digital twins 60 is carried out, advantageously simultaneously and massively, on a respective plurality of metal components 10 in use, by an interaction with the respective RFID Tag 30 identifier elements 20 and based on the respective univocal identification information A.

The metal components 10 in use in the storage/use area 140 may be subjected to an additional control step F9 wherein it is verified whether the number and/or type and/or individual metal components 10 in use within the storage/use area 140 match the number and/or type and/or individual metal components 10 previously entered into the storage/use area 140 and/or previously expected in the storage/use area 140 based on the previously created transfer order T showing the number and/or type of metal components 10 and/or individual metal components 10 being transferred into the storage/use area 140. The further control step F9 is also carried out by advantageously simultaneous and massive interaction with the identifier elements 20 of the metal components 10 in use in the storage/use area 14 on the basis of their respective univocal identification information A.

In more detail, the step of loading F8 into the permanent register R of events E relating to the digital twin 60 of each metal component 10 of the occurred use condition and/or the step of further checking F9 are carried out by at least one simultaneous and massive operation of detecting the univocal identifying information A of the at least one identifier element 20 of each metal component 10 of the respective plurality of components in use in the storage/use area (140).

The loading step F8 and/or the further control step F9 may be carried out by additional detection gates 101, 101' or additional confined detection regions 102, 102' or additional interaction devices 104 such as those previously described. In addition, it may be provided that a plurality of detection apparatuses capable of interacting with the RFID Tag 30 identifier elements 20 of the metal components 10 may be deployed in the storage/use area 140 in order to carry out the loading F8 of the occurred use and/or the further control F9.

Subsequent to the loading step F8 of the occurred use condition or the further control step F9, if any, the tracking method M1 also includes an additional step of loading F10 into the permanent register R of events E relating to each of the respective digital twins 60 corresponding to a respective metal component 10 of a new event indicative of a change of a status condition of the respective metal component 10 from the use condition to a decommissioned condition.

In the case where the storage/use 140 area corresponds to the warehouse 161 of the distribution and/or rental 160 point, the condition of decommissioning corresponds to a condition of transfer of each of the metal components 10 divested from the respective warehouse 161 of the distribution and/or rental 160 point, in particular determined by the execution of a fulfillment order that corresponds to an occurred distribution or rental or to an occurred migration to a physical location different from the warehouse 161 of the distribution and/or rental 160 point.

In the case where the storage/use 140 area corresponds to a construction site 150, the decommissioning condition corresponds to a condition of uninstalling the metal components (10) of at least a portion of a related scaffolding 1.

The step of loading F10 the decommissioning condition of each of the components 10 into the permanent register R of events E associated with the corresponding digital twins 60 is carried out, advantageously simultaneously and massively, on a respective plurality of decommissioned metal components 10 by means of an interaction with the respective RFID Tag 30 identifier elements 20 and based on the corresponding univocal identification information A.

The decommissioned metal components 10 present in the storage/use area 140 may be subjected to at least one additional control step F11 wherein it is verified whether the number and/or type and/or individual decommissioned metal components 10 present in the storage/use area 140 correspond to the number and/or type and/or individual components 10 previously in use and/or previously entered storage/use area 140 and/or previously expected to be in storage/use area 140 based on the previously created transfer order T showing the number and/or type of metal components 10 and/or individual metal components 10 being transferred to storage/use area 140.

The additional control step F11 is performed, through an advantageously simultaneous and massive interaction with the identifier elements 20 of the decommissioned metal components 10 present in the storage/use area 140 on the basis of their respective univocal identification information A of the latter.

More specifically, the step of loading F10 into the permanent event register R of events E related to the digital twin 60 of each metal component 10 of the occurred decommissioning condition and/or the additional control step F11 are performed by at least one simultaneous and massive operation of detecting the univocal identifying information A of the at least one identifier element 20 of each metal component 10 of the related plurality of decommissioned components and present in the storage/use area (140).

The loading step F10 and/or the additional control step F11 may be performed by means of additional sensing gates 101, 101' or additional confined sensing regions 102, 102' or additional interaction devices 104 such as those previously described. In addition, a plurality of sensing equipment capable of interacting with the RFID-tagged identifier elements 20 30 of the metal components 10 may be deployed in the storage/use area 140 in order to perform the loading F10 of the decommissioning and/or the additional control F11.

Subsequent to the loading step F10 of the condition of successful decommissioning or the additional checking step F11, if any, the tracking method M1 further comprises an additional step of interacting F12 with the identifier element 20 of each decommissioned metal component 10 to enter F12.1 in the permanent register R of events E of the related digital twin 60 a status condition of successful exit of said metal component 10 from the storage/use area 140. The operation of entering the successful exit of the metal components 10 from the storage/use area 140 being performed, advantageously simultaneously and massively, on the permanent register R of events E of the digital twins 60 of the metal components 10 exiting the storage/use area 140, by means of an interaction with the identifier elements 20 of the metal components 10 themselves on the basis of the relevant univocal identification information A.

In particular, it is possible that the metal components 10 exiting the storage/use area 140 are subjected to at least one auxiliary control step F13 in which it is verified whether the number and/or type and/or individual metal components 10 exiting the storage/use area 140 correspond to the number and/or type and/or individual components 10 previously decommissioned and/or previously in use and/or previously entered the storage/use area 140 and/or previously expected in the storage/use area 140 based on the previously created transfer order T showing the number and/or type and/or individual metal components 10 being transferred into the storage/use area 140.

The auxiliary control step F13 is carried out, by an optionally simultaneous and massive interaction with the identifier elements 20 of the metal components 10 exiting the storage/use area 140 on the basis of their respective univocal identification information A of the latter.

The entry operation F12.1 in the permanent register R of events E relating to the digital twin 60 corresponding to each metal component 10 of the occurred exit and/or the auxiliary control step F13, are carried out by at least one simultaneous and massive operation of detecting the univocal identification information A of the at least one identifier element 20 of each metal component 10 of the respective plurality of components exiting the storage/use area 140.

The F12.1 entry operation of the occurred exit and/or the control step F13 can be carried out by means of additional detection gates 101, 101' or additional confined detection regions 102, 102' or additional interaction devices 104 such as those previously described.

In order to enable the execution of the tracking method M1 described above, it is also provided a respective system for managing and tracking metal components 10 for scaffolding 1 from the time of their preparation F1 in the respective preparation station 100, with respective creation of their digital twins 60 in the corresponding digital environment B to the permanence of these metal components 10 in the storage/use area 140.

The management and tracking system includes the detection apparatus designed to simultaneously and massively detect the univocal identification information A present in the RFID Tag 30 identifier elements 20 fixed on the metal components 10 being tracked.

In addition, the management and tracking system is connected to the digital environment B which it exploits through corresponding access keys and/or appropriately dedicated algorithms.

In order to manage the communication between the detection apparatus and the RFID 30 Tag identifier elements 20 as well as the management of the digital environment B and the updating of the digital twins 60 of the metal components 10 in that environment B, the system is provided with one or more programmable electronic units provided with corresponding communication interfaces to dialogue with the detection apparatus and the management platform of the digital environment B through corresponding management software.

### Advantages

The object of the present invention makes it possible to solve the drawbacks found in the known technique while also enabling the achievement of numerous advantages.

First of all, the presence of an RFID Tag on each metal component allows all data, information and the current status condition of each metal component to be monitored at any time and in any place by special detection apparatuses without errors or excessive long processing time.

In addition, the permanent event log of each digital twin allows the maintenance of an unaltered history of data, information, and changes in the status conditions of each metal component, providing an accurate view of the life of each metal component.

The features of each protective capsule and the adhesive substances used allow for a strong fixing which also serves as a guarantee seal against any tampering attempts. In fact, tampering attempts are not easy to carry out and inevitably lead to breakage or obvious damage to the protective capsule and/or RFID tag.

Finally, the material, shape, and location of the capsules on the metal components protect the RFID Tags from the shock that the metal components are normally subjected, during transportation, scaffolding assembly and disassembly, and in warehouses and construction site areas.

## Claims

1. Tracking method (M1) of metal components (10) of scaffolding (1) used at construction sites (150) and/or in storage at distribution and rental points (160), comprising the following steps:
- arranging (F1) at least a plurality of metal components (10) for scaffolding (1);
- fixing (F2) on each metal component (10) of the respective plurality of components at least one identifier element (20) configured to be associated with one or more information data relating to the respective metal component (10), the at least one identifier element (20) having at least one univocal identifying information (A) configured to also univocally identify the corresponding metal component (10) to which it is fixed;
- creating (F3) an univocal digital twin (60) of each metal component (10) of the related plurality of components, in a corresponding digital environment (B) wherein the digital environment (B) comprises a computer network based on a blockchain technology or platform, the digital twins (60) being univocally created (F3) by a simultaneous and massive operation of detecting the identifying information (A) present in the at least one identifier element (20) of each metal component (10) arranged, the creation step (F3) of each digital twin (60) comprising, or being followed by a creation operation (F3.4), for each digital twin (60), of a permanent register (R) of events (E), non-removable and non-erasable, in which each event (E) identifies a certain status condition of the respective metal component (10) and is entered into the respective permanent register (R), each event (E) being entered by queuing one or more events (E) previously entered, each entered event (E) being not removable, erasable or editable;
- transferring (F4) each metal component (10) of the related plurality of components subjected to the creation step (F3) of the respective digital twin (60) to a corresponding storage/use area (140) of such metal components (10), in particular a construction site (150) or a distribution and/or rental point (160) of such metal components (10);
- interacting (F5) with the identifier element (20) of each metal component (10) by means of the respective at least one identifying information (A), to enter in the permanent register (R) of events (E) one or more events (E) each time the respective metal component (10) has a change of status, in particular a change of status that is needed in the storage/use area (140) of the metal component (10), the permanent record (R) of events (E) of the digital twin (60) of each metal component (10) by keeping track of any data and/or information and/or change of status related to the latter from the creation step (F3) of the respective digital twin (60) in the corresponding digital environment (B) to its permanence in the storage/use area (140).

2. Tracking method (M1) according to the previous claim, wherein the step of fixing (F2) the at least one identifier element (20) to each metal component (10) of a relative plurality of components manufactured and arranged, comprises the step of fixing (F2) a respective RFID Tag (30) having a respective and univocal non-modifiable EPC code defining the univocal identification information (A) of the respective identifier element (20), in particular the step of fixing (F2) the at least one RFID Tag (30) to each metal component (10) being performed according to the following steps:
- housing the RFID Tag (30) in a respective protective capsule (40);
- fixing, optionally by the use of at least one adhesive fixing substance or by welding, the protective capsule (40) to the respective metal component (10).

3. Tracking method (M1) according to any one of the previous two claims, wherein the step of creating (F3) the univocal digital twin (60) of each metal component (10) of the respective plurality of components in the corresponding digital environment (B), is performed by carrying out a simultaneous and massive detection operation (F3.1) of the identification information (A) of the identifier elements (20) fixed to the metal components (10) of the corresponding plurality of components, in particular, the identification information (A) of the identifier elements (20) being defined by the univocal EPC codes of the corresponding RFID tags (30), optionally the detection operation (F3.1) determining, for each metal component (10) under detection, the automatic assignment of the univocal identification information (A) of the at least one respective identifier element (20) as the univocal identification information of the respective metal component (10).

4. Tracking method (M1) according to any one of the previous claims, in which the step of creating (F3) of the univocal digital twin (60) of each metal component (10) of one or more plurality of components in the corresponding digital environment (B), is carried out simultaneously and massively by:
- the crossing of the respective metal components (10) through a detection gate (101) provided with at least one detection apparatus, in particular operating in radio frequency, optionally by means of at least one UHF antenna, in particular the crossing of the detection gate (101) by the metal components (10) being carried out by simultaneously crossing all the metal components (10) to be detected or according to a sequential crossing of groups of metal components (10) of the same plurality of components to be detected,
or by the following steps:
- positioning the metal components (10) of one or more plurality of components within a corresponding confined detection region (102) provided with one or more detection apparatuses, particularly operating in radio frequency, optionally by means of at least one UHF antenna, more optionally the confined detection region (102) being limited by a controlled chamber;
- simultaneously and massively detecting all univocal identification information (A) of the identifier elements (20) fixed to the corresponding metal components (10) in the confined detection region (102).

5. Tracking method (M1) according to any one of the previous claims, the step of transferring (F4) of each metal component (10) of a respective plurality of components into the storage/use area (140) of said metal components (10), is carried out upon entry (F4.1) in the permanent register (R) of the digital twin (60) of each metal component (10) of an event (E) indicative of a status condition of successful transfer, the entry (F4.1) of the successful transfer being carried out simultaneously and massively on the permanent register (R) of events (E) of the digital twins (60) corresponding to the metal components (10) of the plurality of components being transferred, by means of an interaction with the identifier elements (20) of the metal components (10) themselves.

6. Tracking method (M1) according to the previous claim, wherein the entry operation (F4.1) of the event (E) relating to the new status condition of successful transfer into the permanent register (R) of events (E) of the digital twin (60) relating to each metal component (10) prior to the transfer of the metal components (10) into the storage/use area (140), is carried out by at least one simultaneous and massive operation of detecting the univocal identifying information (A) of the at least one identifier element (20) corresponding to each metal component (10) of the respective plurality of components to be transferred, the entry (F4.1) of the successful transfer being carried out by:
- the crossing of the respective metal components (10) through a respective detection gate (101') provided with at least one detection apparatus, in particular operating in radio frequency, optionally by means of at least one UHF antenna, in particular the crossing of the detection gate (101') by the metal components (10) being carried out by simultaneously crossing all of the metal components (10) to be detected or according to a sequential crossing of groups of metal components (10) of the same plurality of components to be detected,
or by the following steps:
- positioning the metal components (10) of a relative plurality of components in a respective confined detection region (102') provided with one or more detection apparatuses, particularly operating in radio frequency, optionally by means of at least one UHF antenna, more optionally the confined detection region (102') being limited by a controlled chamber;
- simultaneously and massively detecting all the univocal identification information (A) of the corresponding identifier elements (20) fixed to the corresponding metal components (10) in the confined detection region (102');
or
by the use of at least one interaction device (104), in particular portable, provided with at least one detection apparatus, in particular operating in radio frequency, optionally by means of at least one UHF antenna, the interaction device (104) being configured to communicate with the at least one identifier element (20) of each metal component (10) to simultaneously and massively enter into the permanent registers (R) of events (E) of the corresponding digital twins (60) of the metal components (10) new events (E) related to new status conditions of the respective metal components (10).

7. Tracking method (M1) according to any one of the previous two claims, wherein the entry operation (F4.1) in the permanent register (R) of events (E) of the digital twin (60) of each metal component (10) of an event (E) relating to a status condition of successful transfer into the storage/use area (140) of the metal components (10) is followed by at least one interaction step (F6) with the identifier element (20) of the respective metal component (10) to enter (F6.1) in the permanent register (R) of events (E) of the respective digital twin (60) a status condition of successful entrance of that metal component (10) into the storage/use area (140), the entry (F6.1) of the successful entrance of the metal components (10) into the storage/use area (140) being carried out, optionally simultaneously and massively, on the permanent register (R) of events (E) of the digital twins (60) of the metal components (10) of the plurality of components entering the storage/use area (140), by means of an interaction with the identifier elements (20) of the metal components (10) themselves on the basis of their univocal identification information (A), in particular, the metal components (10) entering the storage/use area (140) of the metal components (10) being subjected to at least one control step (F7) wherein it is verified whether the number of metal components (10) entering and/or the type of the same and/or the individual components (10) correspond to the number of metal components (10) and/or the type themselves and/or the individual components (10) expected in the storage/use area (140) based on a previously created transfer order (T) showing the number and/or the type and/or the individual metal components (10) to be transferred to the storage/use area (140), the control step (F7) being carried out, by means of an optionally simultaneous and massive interaction with the identifier elements (20) of the metal components (10) entering the storage/use area (140) on the basis of their respective univocal identification information (A).

8. Tracking method (M1) according to the previous claim, wherein the entry operation (F6.1) of the event (E) relating to the new status condition of the successful entry into the permanent register (R) of events (E) corresponding to the digital twin (60) related to each metal component (10) and/or the control step (F7), are carried out by means of at least one simultaneous and massive operation of detecting the univocal identifying information (A) of the at least one identifier element (20) of each metal component (10) of the respective plurality of components entering the storage/use area (140), the entry (F6.1) of the successful entrance and/or the control step (F7) being carried out by:
- the crossing of the respective metal components (10) through a respective detection gate (101') provided with at least one detection apparatus, in particular operating in radio frequency, optionally by means of at least one UHF antenna, in particular the crossing of the detection gate (101') by the metal components (10) being carried out by simultaneously crossing all of the metal components (10) to be detected or according to a sequential crossing of groups of metal components (10) of the same plurality of components to be detected,
or by the following steps:
- positioning the metal components (10) of a relative plurality of components in a respective confined detection region (102') provided with one or more detection apparatuses, particularly operating in radio frequency, optionally by means of at least one UHF antenna, more optionally the confined detection region (102') being limited by a controlled chamber;
- simultaneously and massively detect all of the univocal identification information (A) of the corresponding identifier elements (20) fixed on the corresponding metal components (10) in the detection region (102');
or
- by the use of at least one interaction device (104), in particular portable, provided with at least one detection apparatus, in particular operating in radio frequency, optionally by means of at least one UHF antenna, the interaction device (104) being configured to communicate with the at least one identifier element (20) of each metal component (10) to simultaneously and massively enter into the permanent registers (R) of events (E) of the respective digital twins (60) of the metal components (10) new events (E) relating to new status conditions of the respective metal components (10).

9. Tracking method (M1) according to any one of the previous two claims, further comprising a loading step (F8) in the permanent register (R) of events (E) corresponding to each of the respective digital twins (60) related to the respective metal components (10) entering the storage/use area (140) a new event indicative of the change of a status condition of the respective metal component (10) to a use condition of the same in the storage/use area (140), the use condition corresponding to at least one of the following options:
- storage of metal components (10) in a respective warehouse (140) of a distribution and/or rental point according to respective stationing positions, optionally the loading step (F8) of the status condition relating to the use of each of the components (10) being carried out, simultaneously and massively, on a relative plurality of metal components (10) in storage, by means of an interaction with the respective identifier elements (20) and on the basis of the respective univocal identification information (A);
- installation of a respective scaffolding (1) at a respective construction site (150), optionally the loading step (F8) of the status condition relating to the use of each of the components (10) being carried out, simultaneously and massively, on a respective plurality of metal components (10) that are installed to form at least a portion of a scaffolding (1), through an interaction with the respective identifier elements (20) and on the basis of the respective univocal identifying information (A) of the installed metal components (10);
optionally, the metal components (10) in use in the storage/use area (140) being subjected to at least one additional control step (F9) in which it is verified whether the number and/or type and/or individual metal components (10) in use within the storage/use area (140) match the number and/or type and/or individual metal components (10) previously entered into the storage/use area (140) and/or previously expected in the storage/use area (140) based on the previously created transfer order (T) showing the number and/or type of metal components (10) and/or individual metal components (10) being transferred into the storage/use area (140), the further control step (F9) being carried out, by means of an optionally simultaneous and massive interaction with the identifier elements (20) of the metal components (10) in use in the storage/use area (140) on the basis of their respective univocal identification information (A).

10. Tracking method (M1) according to the previous claim, wherein the step of loading (F8) into the permanent register (R) of events (E) relating to the digital twin (60) of each metal component (10) of the occurred use condition and/or the step of further control (F9) are carried out by means of at least one simultaneous and massive operation of detecting the univocal identifying information (A) of the at least one identifier element (20) of each metal component (10) of the respective plurality of components in use in the storage/use area (140), the successful use and/or further control step (F9) being carried out by:
- the crossing of the respective metal components (10) through a respective detection gate (101') provided with at least one detection apparatus, in particular operating in radio frequency, optionally by means of at least one UHF antenna, in particular the crossing of the detection gate (101') by the metal components (10) being carried out by simultaneously crossing all of the metal components (10) to be detected or according to a sequential crossing of groups of metal components (10) of the same plurality of components to be detected,
or through the by steps:
- positioning the metal components (10) of a respective plurality of components in a respective confined detection region (102') provided with one or more detection apparatuses, particularly operating in radio frequency, optionally by means of at least one UHF antenna, more optionally the confined detection region (102') being limited by a controlled chamber;
- simultaneously and massively detecting all of the univocal identification information (A) of the corresponding identifier elements (20) fixed to the respective metal components (10) in the confined detection region (102');
or
- by the use of at least one interaction device (104), in particular portable, provided with at least one detection apparatus, in particular operating in radio frequency, optionally by means of at least one UHF antenna, the interaction device (104) being configured to communicate with the at least one identifier element (20) of each metal component (10) to simultaneously and massively enter into the permanent registers (R) of events (E) of the respective digital twins (60) of the metal components (10) new events (E) relating to new status conditions of the respective metal components (10).

11. Tracking method (M1) according to any one of the two previous claims, further comprising an additional loading step (F10) into the permanent register (R) of events (E) relating to each of the respective digital twins (60) of a new event indicative of the change of a status condition of the respective metal component (10) to a decommissioning condition of the same metal component (10) in use in the storage/use area (140), the decommissioning condition corresponding to at least one of the following options:
- transfer of the metal components (10) from the respective warehouse (161) of a distribution and/or rental point (160), in particular determined by the execution of an order of fulfillment corresponding to a successful distribution or rental or to a successful migration to a physical location different from the warehouse (161) of the distribution and/or rental point (160), optionally the additional loading step (F10) of the condition of decommissioning of metal components (10) being carried out, simultaneously and massively, on a relative plurality of metal components (10), by means of an interaction with the respective identifier elements (20) and on the basis of the respective univocal identifying information (A) of the latter;
- de-installation of the metal components (10) of at least a portion of a respective scaffolding (1) of a respective construction site (150), optionally the additional loading step (F10) of the condition of decommissioning of each of the components (10) being carried out, simultaneously and massively, on a relative plurality of metal components (10) being removed from the respective scaffolding (1), by means of an interaction with the respective identifier elements (20) and on the basis of the respective univocal identification information (A) of the installed metal components (10);
in particular, the decommissioned metal components (10) present in the storage/use area (140) being subjected to at least one additional control step (F11) wherein it is verified whether the number and/or type and/or individual metal components (10) present in the storage/use area (140) correspond to the number and/or type and/or individual components (10) previously in use and/or previously entered in the storage/use area (140) and/or previously expected in the storage/use area (140) based on the transfer order (T) previously created that reports the number and/or type of metal components (10) and/or individual metal components (10) being transferred to the storage/use area (140), the additional control step (F11) being carried out, by means of an optionally simultaneous and massive interaction with the identifier elements (20) of the decommissioned metal components (10) present in the storage/use area (140) on the basis of their respective univocal identification information (A).

12. Tracking method (M1) according to the previous claim, wherein the additional loading step (F10) into the permanent register (R) of events (E) relating to the digital twin (60) corresponding to each metal component (10) of the occurrence of the decommissioning condition and/or the additional control step (F11), are carried out by at least one simultaneous and massive operation of detecting the univocal identifying information (A) of the at least one identifier element (20) of each metal component (10) of the respective plurality of decommissioned components present in the storage/use area (140), the successful decommissioning and/or the additional control step (F10) being carried out by:
- the crossing of the respective metal components (10) through a respective detection gate (101') provided with at least one detection apparatus, in particular operating in radio frequency, optionally by means of at least one UHF antenna, in particular the crossing of the detection gate (101') by the metal components (10) being carried out by simultaneously crossing all of the metal components (10) to be detected or according to a sequential crossing of groups of metal components (10) of the same plurality of components to be detected,
or through the following steps:
- positioning the metal components (10) of a respective plurality of components within a respective confined detection region (102') provided with one or more detection apparatuses, particularly operating in radio frequency, optionally by means of at least one UHF antenna, more optionally the confined detection region (102') being limited by a controlled chamber;
- simultaneously and massively detecting all of the univocal identification information (A) of the corresponding identifier elements (20) fixed to the corresponding metal components (10) in the confined detection region (102');
or
- by the use of at least one interaction device (104), in particular portable, provided with at least one detection apparatus, in particular operating in radio frequency, optionally by means of at least one UHF antenna, the interaction device (104) being configured to communicate with the at least one identifier element (20) of each metal component (10) to simultaneously and massively enter into the permanent registers (R) of events (E) of the respective digital twins (60) of the metal components (10) new events (E) relating to new status conditions of the respective metal components (10).

13. Tracking method (M1) according to any one of the previous two claims, further comprising an additional step of interacting (F12) with the identifier element (20) of each decommissioned metal component (10) to enter (F12.1) in the permanent register (R) of events (E) of the relevant digital twin (60) a status condition of the successful exit of said metal component (10) from the storage/use area (140), the entry of the successful exit of the metal components (10) from the storage/use area (140) being carried out, optionally simultaneously and massively, on the permanent register (R) of events (E) of the digital twins (60) of the metal components (10) exiting the storage/use area (140), by means of an interaction with the identifier elements (20) of the metal components (10) themselves on the basis of their univocal identification information (A), in particular, the metal components (10) exiting the storage/use area (140) being subjected to at least one auxiliary control step (F13) in which it is verified whether the number and/or type and/or individual metal components (10) exiting the storage/use area (140) correspond to the number and/or type and/or individual components (10) previously decommissioned and/or previously in use and/or previously entered the storage/use area (140) and/or previously expected in the storage/use area (140) based on the previously created transfer order (T) showing the number and/or type and/or individual metal components (10) being transferred to the storage/use area (140), the auxiliary control step (F13) being carried out, by means of an optionally simultaneous and massive interaction with the identifier elements (20) of the metal components (10) exiting the storage/use area (140) on the basis of their respective univocal identification information (A).

14. Tracking method (M1) according to the previous claim, wherein the entry (F12.1) in the permanent register (R) of events (E) relating to the digital twin (60) of each metal component (10) of the successful exit and/or the auxiliary control step (F13), are carried out by means of at least one simultaneous and massive operation of detecting the univocal identifying information (A) of the at least one identifier element (20) of each metal component (10) of the respective plurality of components exiting the storage/use area (140), the successful exit and/or the auxiliary control step (F13) being carried out by:
- the crossing of the respective metal components (10) through a respective detection gate (101') provided with at least one detection apparatus, in particular operating in radio frequency, optionally by means of at least one UHF antenna, in particular the crossing of the detection gate (101') by the metal components (10) being carried out by simultaneously passing all of the metal components (10) to be detected or according to a sequential crossing of groups of metal components (10) of the same plurality of components to be detected,
or through the following steps:
- positioning the metal components (10) of a respective plurality of components in a respective confined detection region (102') provided with one or more detection apparatuses, particularly operating in radio frequency, optionally by means of at least one UHF antenna, more optionally the confined detection region (102') being limited by a controlled chamber;
- simultaneously and massively detecting all of the univocal identification information (A) of the corresponding identifier elements (20) fixed to the respective metal components (10) in the confined detection region (102');
or
- by the use of at least one interaction device (104), in particular portable, provided with at least one detection apparatus, in particular operating in radio frequency, optionally by means of at least one UHF antenna, the interaction device (104) being configured to communicate with the at least one identifier element (20) of each metal component (10) to simultaneously and massively enter into the permanent registers (R) of events (E) of the respective digital twins (60) of the metal components (10) new events (E) relating to new status conditions of the respective metal components (10).

15. Scaffolding (1), optionally modular, comprising a plurality of metal components (10) which can be mutually engaged and combined to define the structure of the respective scaffolding (1), the metal components (10) comprising at least a plurality of uprights (11) or a plurality of upright frames (15) and/or a plurality of ledgers/bracings (12) with clamp portions (12c) or a plurality of ledgers/bracings (18) with engagement joints (18a) and/or a plurality of planks (13) and/or a plurality of toeboards (14), **characterized in that** each of said metal components (10) is provided with at least one RFID Tag (30) defining a respective identifier element (20), the at least one RFID Tag (30) of each metal component (10) defining an univocal identifying information (A) of the respective metal component (10), the at least one RFID Tag (30) being fixed on each metal component (10), optionally permanently, non-removable, in particular by gluing or welding.
